(19) Europäisches Patentamt
European Patent Office
Office européen des brevets

(11) EP 3 831 883 B1

(12) **EUROPEAN PATENT SPECIFICATION**

(45) Date of publication and mention of the grant of the patent:
**17.06.2026 Bulletin 2026/25**

(21) Application number: **19843116.5**

(22) Date of filing: **29.07.2019**

(51) International Patent Classification (IPC):
***C08L 67/06*** (2006.01) ***C08K 3/016*** (2018.01)
***C08K 3/32*** (2006.01) ***C08K 5/3492*** (2006.01)
***C08K 5/053*** (2006.01) ***C09K 21/00*** (2006.01)
***B61D 33/00*** (2006.01) ***B61D 37/00*** (2006.01)
***C08F 283/01*** (2006.01) ***C08K 7/14*** (2006.01)
***C08L 51/08*** (2006.01) ***C09D 167/06*** (2006.01)
***C09K 21/10*** (2006.01)

(52) Cooperative Patent Classification (CPC):
(C-Sets available)
**C09K 21/10; B29C 70/086; C08F 283/01; C08K 3/32; C08K 5/053; C08K 5/34922; C08K 7/14; C08L 51/08; C09D 167/06;**
C08K 2003/323 (Cont.)

(86) International application number:
**PCT/ES2019/070534**

(87) International publication number:
**WO 2020/025845 (06.02.2020 Gazette 2020/06)**

(54) **COMPOSITE MATERIAL, MANUFACTURING METHOD AND USE OF SAME**

VERBUNDSTOFF, VERFAHREN ZU SEINER HERSTELLUNG UND SEINE VERWENDUNG

MATÉRIAU COMPOSITE, SON PROCÉDÉ DE FABRICATION ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2018 ES 201830787**

(43) Date of publication of application:
**09.06.2021 Bulletin 2021/23**

(73) Proprietor: **Polynt Composites Spain, S.L.**
**09200 Miranda de Ebro Burgos (ES)**

(72) Inventor: **TORRELLES NOGUÉS, Antonio deceased (ES)**

(74) Representative: **Modiano, Gabriella Diana**
**Modiano & Partners SA**
**Steinsdorfstraße 14**
**80538 München (DE)**

(56) References cited:
**EP-A1- 1 164 160**
**ES-T3- 2 611 494**
**US-A1- 2004 266 294**
**US-A1- 2005 009 965**
**US-A1- 2011 237 711**

- **DATABASE WPI Week 503185, Derwent World Patents Index; AN 2002-503185**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 283/01, C08F 212/08;**
**C08K 3/32, C08L 67/06;**
**C08K 5/053, C08L 67/06;**
**C08K 5/34922, C08L 67/06;**
**C08K 7/14, C08L 67/06;**
**C09D 167/06, C08K 3/32, C08K 5/34922,**
**C08K 5/053**

## Description

### Field of the invention

The present invention relates to the field of composite materials based on resins, their method of manufacture and use, in particular their use in the fields of transportation, construction, civil engineering and public works, leisure and urban furniture, more particularly their use in railroad materials complying with the specifications set forth in the standard UNE EN 45545-2:2013+A1:2015, as well as the finished products obtained from said composite materials.

### Background of the invention

The European Committee for Standardization has been operating in Europe since 1975, better known by its French acronym: CEN (Comité Européen de Normalisation), with headquarters in Brussels. CEN has been publishing standards in various fields of activity. The first standard published in regard to fire requirements for railway vehicles was CEN TS 45545:2009, structured in 7 parts and dealing with fire prevention in railway cars. In 2012, CEN approved the EN (European Standard) version, becoming a European Standard Technical Instruction. The last version published in Spain by AENOR (Spanish Association for Standardization and Certification) was in January 2016: UNE-EN 45545-2:2013+A1:2015 *"Railway applications. Fire prevention for railway vehicles. Part 2: requirements for fire behavior of materials and components."*

In Spain, the European Standardization for Railroads began with the Resolution of 10 July 2009 of the General Directorate of Railway Infrastructure, which ratified the *"Technical Specification for Homologation of Railway Rolling Stock."* Regulation 13539, BOE 197 of 15 August 2009 (3). Prior to this date, each member of the CEN had their own Standards, which furthermore were not equivalent to each other. In Spain, the Standards used in the railway sector were:

- Fire reaction test:

  UNE 23727:1990. *"Fire reaction tests for construction materials. Classification of the materials used in construction. "*
  UNE 23721:1990. *"Fire reaction tests for construction materials. Radiation test applicable to rigid or similar materials of any given thickness and flexible materials of a thickness greater than 5 mm."*
  UNE EN 13501-1:2002. "Classification as a function of fire behavior of construction products and building elements. Part 1: Classification based on data obtained from fire reaction tests."

- Test for smoke toxicity and density, for which French Standards are adopted (4):

  NF X 10702:2006. Determination of smoke density
  NF X 70100:2006. Determination of toxic gases.

In other European countries, such as Germany, England, and Italy, their own national standards also exist:

Germany: DIN 5510, DIN 4102. England: BS 6853, BS 476. France: NF F 16-101, NF P 92-501, NF X 10702:2006, NF X 70100:2006. Italy: UNI 11170-3:2005.
Standards also exist in the USA (ASTM), etc. Standards have also been established on the corporate level, such as technical directive DT PCI /5A of RENFE.

The incorporation of the Standard UNE UN 45545-2:2013+A1:2015 brings three fundamental advantages in regard to the fire behavior of the materials used in railway vehicles:

a) The existence of a transnational standard, such as the current EN 45545-2:2013+A1, becomes a necessity, for by only a single homologation one gains access to the markets of the 27 countries making up the CCE, and those of the associate members of the CEN: Croatia, Turkey, Iceland, Norway and Switzerland.
b) Even though not cited specifically in the Standard, the specifications required are not achieved with halogenated resins, and the use of alternative flame retardants, more friendly to the environment, is imposed.
c) The standard as a whole entails a very important change in regard to safety, since it not only addresses the fire behavior of the materials making up the railway cars (in part 2), but also aspects such as firewalls (in part 3), design (in part 4), expanded safety requirements for trolley buses and magnetic levitation vehicles (in part 5), fire control and management systems (in part 6), and also the safety requirements for preventing fires in flammable gas and liquid installations (in part 7).

The standard UNE EN 45545-1 defines 4 operational categories, depending on the rail infrastructure of the lines (underground line, elevated structures, tunnels, open lines, etc.). It also defines 4 types of vehicles according to the ease of lateral evacuation and accessibility to definitive safety zones or stations:
N: normal vehicles. A: driverless vehicles. D: dual-level vehicles. S: sleeper cars.

In addition, it establishes three risk levels, from least to most severe, which are: HL1, HL2, HL3; it identifies and classifies all the components of the railway vehicle; and it defines 26 Requirements.

For example, the typical requirements for composite materials based on thermosetting resins and reinforcement fibers are:

R1 interior components (structure and lining). Luggage racks. Control console.
R2 tables and washstands.
R3 strips.
R6 basic structure of the passenger seat.
R7 interior surfaces of the corridors. Walls of the external structure of the vehicle.
R17 front part of the train.

For each Requirement, specifications are established based on 17 ISO standards. Using the operational categories and the types of vehicle, one gets a risk matrix, which appears in EN 45545 Part 2. This matrix contemplates three levels of risk, the most demanding one being HL3. In this way, for example, a railway vehicle intended for a trolley car will fall within risk level HL1, while another one intended for a subway will fall within risk level HL3.

Table 1: Risk matrix.

| DESIGN CATEGORY | | | | |
|---|---|---|---|---|
| Operational category | N: standard vehicle | A: automatic vehicle with no emergency crew on board | D: double deck vehicle | S: sleeper and rest car, single or double deck |
| 1 | HL1 | HL1 | HL1 | HL2 |
| 2 | HL2 | HL2 | HL2 | HL2 |
| 3 | HL2 | HL2 | HL2 | HL3 |
| 4 | HL3 | HL3 | HL3 | HL3 |

For each Requirement, depending on the risk level, the specifications which the tested material must meet are established. For example, for Requirement 1:

Table 2: Specifications established for requirement R1 (interior panels) for the three established risk levels HL1, HL2 Y HL3.

| **Test results Requirement 1** | | | | | | |
|---|---|---|---|---|---|---|
| **Test method and number** | **Parameter** | **Number of tests** | **Average for measured parameter** | **Parameters needing to be met R1-HL1** | **Parameters needing to be met R1-HL2** | **Parameters needing to be met R1-HL3** |
| T02<br>ISO 5658-2 | CFE (kW/m2) | 3 | 23.98 kW/m2 | ≥ 20 kW/m2 | ≥ 20 kW/m2 | ≥ 20 kW/m2 |
| T03.01<br>ISO 5660-1: 50 kW/m2 | MARHE (kW/m2) | 3 | 85.02 kW/m2 | - | ≤ 90 kW/m2 | ≤ 60 kW/m2 |

(continued)

| Test results Requirement 1 | | | | | | |
|---|---|---|---|---|---|---|
| **Test method and number** | **Parameter** | **Number of tests** | **Average for measured parameter** | **Parameters needing to be met R1-HL1** | **Parameters needing to be met R1-HL2** | **Parameters needing to be met R1-HL3** |
| T10.01<br>ISO 5659-2: 50 kW/m2 | Ds (4 minutes) (nondimensi onal) | 3 | 121.03 | ≤ 600 | ≤ 300 | ≤ 150 |
| T10.02<br>ISO 5659-2: 50 kW/m2 | VOF4 (min) | 3 | 237.77 min | ≤ 1200 min | ≤ 600 min | ≤ 300 **min** |
| T11.01<br>ISO 5659-2: 50 kW/m2 + EN 45545-2. Appendix C. Method 1 | $CIT_G$ (4 minutes) (nondimensi onal) | 3 | 0.029 | ≤ 1.2 | ≤ 0.9 | ≤ 0.75 |
| T11.01<br>ISO 5659-2: 50 kW/m2 + EN 45545-2.<br>Appendix C.<br>Method 1 | $CIT_G$ (8 minutes) (nondimensi onal) | 3 | 0.146 | ≤ 1.2 | ≤ 0.9 | ≤ 0.75 |

Among the most important tests should be mentioned:

*ISO 5658-2:2006. "Lateral flame propagation."* Basically: one measures the critical heat flux (CFE) (kW/m2) for extinguishing a laterally propagating flame, applied to interior panels located in a vertical position. Pieces of 800 mm x 155 mm and maximum thickness of 70 mm are required for the test.

*ISO 5660-1:2015.* "Calorimetric cone. " Basically: one measures the parameter known as MARHE, which is the mean value of the maximum rate of heat emission (KW/m2). The calorimetric cone also gives information about:

The variation in the mass loss of the test specimen over time.
The heat generated per unit of mass lost
The variation in the smoke generated over time
The variation over time of gases such as: CO, CO2, O2, including HCl and HBr

*ISO 5659-2:2013. "Smoke toxicity and density chamber."* Basically: one measures the optical density and toxicity of the gases generated upon burning a test specimen of 75 mm x 75 mm down to a maximum thickness of 25 mm by a heat source of 50 KW/m2 without pilot flame, also using optionally a source of 25 KW/m2 in the presence of a pilot flame, in tests where a heat source of this power is specified. The parameters measured are:

*Ds (4):* Optical density of the smoke at 4 minutes from the start of the test. It is obtained as the quotient of the transmittance measured by the photometric detector at a time "t" and the initial reference value. It is a nondimensional number.

*Ds max:* The maximum density registered during the test.

*VOF4:* The area of the graph of Ds (optical smoke density) as a function of time until reaching 4 minutes.

*CITg: Conventional Index of Toxicity.* A nondimensional number obtained, according to the guidelines of the standard, by applying the following expression:

$$CIT_G = 0.0805x \sum_{i=1}^{i=8} \frac{c_i}{C_i}$$

$c_i$ is the concentration of the gas "i" in the ISO 5659-2 chamber, expressed in $mg/m^3$

$C_i$ is the reference concentration of the gas "i."

Table 3: Values of reference concentration Ci

| Gas Component | Reference concentration (mg/m3) |
|---|---|
| Carbon dioxide CO2 | 72000 |
| Carbon monoxide CO | 1380 |
| Hydrobromic acid HBr | 99 |
| Hydrochloric acid HCl | 75 |
| Hydrocyanic acid HCN | 55 |
| Hydrofluoric acid HF | 25 |
| Nitrogen oxides NOx | 38 |
| Sulfur dioxide SO2 | 262 |

The list of components of a railway vehicle is very large; even so, as mentioned above, the Standard UNE EN 45545-1 allows them to be grouped in 26 requirements, for which 17 ISO standards are applied, there being a distinct specification for each risk level, the most severe one corresponding to risk level HL3. The components making up a railway vehicle are listed and classified by the standard UNE EN 45455-1. These components, whether interior lining panels, seats, tables, etc., are made up of one or more materials which have had to be previously homologated based on the specifications set forth for each requirement.

The state of the art has made it clear that halogenated resins cannot achieve the smoke density/toxicity specifications and in the best of cases the calorimetric cone test is passed very fairly under the risk levels HL1 and perhaps HL2, but in no case HL3 for the distinct requirements set forth by the standard. The present inventors have shown that, with flame retardant systems based on phosphorus/nitrogen and generating an intumescent layer, one may achieve the specifications set forth by the Standard UNE ISO 45545-2:2013+A1:2015 for the different requirements and risk levels, even the maximum risk level HL3, with greater efficiency than in the prior art.

Patents exist for materials which meet the specifications set forth by the standard UNE EN 45545-2 for one or more requirements and risk levels:

- For cables, see JP20171888248A.
- For rubber, see CN106280020A
- For seats, see US9266541B2
- For polycarbonate, see US20160347952, US8969447B2 and US9365729B2
- For polyurethane, see EP2726528A1
- For composites with thermosetting resins and reinforcement fibers, see WO2010069465A2, which relates to a system for improving the fire reaction by intumescence using a formulation which meets the different requirements and risk classes set forth by the standard UNE EN 45545-2. Further composite materials are disclosed in US 2011/237711 A1, for instance.

It is important to be clear about what the intumescence is, how it is formed and what it is used for. It is said that a coating is "intumescent" when it has the ability to swell upon being heated above a certain temperature, generating a heat insulating layer around the elements covered by it.

There are three major materials in the formation of the intumescence:

- Ammonium polyphosphate, which decomposes above 250°C, releasing ammonia gas, which produces an expansive process of the material, similar to baking bread. With sufficient oxygen and temperature, the ammonia gas may burn, generating further gases. After the liberation of the ammonia, basically polyphosphoric acid remains. Polyphosphoric acid is a powerful dehydrating agent, able to dehydrate polyhydroxylic compounds.

- Polyhydroxylic compounds, such as polysaccharides, such as starch, disaccharides, such as saccharose, including compounds of lower molecular weight, such as pentaerythrite, or derivates such as dipentaerythrite. These polyhydroxylic compounds have the property of being carbonized by dehydration with polyphosphoric acid, which is hydrolyzed to form diphosphoric acid or pyrophosphoric acid.
  The carbon layer formed after the preceding dehydration reaction is known as "char" and it is formed of structured carbon. See J. Troitzsch, Plastics Flammability Handbook. Principles, regulations, testing and approval. Munich: Hanser publishers. 2004.

- Melamines as potentiators of the expansive effect by the ammonia gas liberated in their thermal decomposition, potentiating the ammonia gas liberated by the ammonium polyphosphate.

In the majority of the tests set forth for the requirements in which composites of thermosetting resins and reinforcement fibers are employed, the standard ISO 5660-1:2015 is used, for example to handle the calorimetry cone test with a heat of 50 kW for the tests involving the requirements demanded of composites of thermosetting resins reinforced with fibers. After the test, which lasts 20 minutes, the specimen is totally destroyed. Under these test conditions, the only strategy for obtaining the best possible classification is by forming an intumescent layer which protects the more internal zones of the specimen from the calorific energy.

## Brief description of the drawings

Figure 1 shows the resin reactivity curve. A) Resin of vinyl ester: catalyzed with 0.3% Co 6% and 2% PMEK 50%. B) Resin of vinyl ester: catalyzed with 0.3% Co 6% 2% PMEK 50% and 0.1% pTBC 10%, where:

In general terms, and for a standard resin, we may have a gel time of around one hour when using 0.1-0.2% of cobalt salt, such as cobalt octoate with a cobalt content of 6%, and 1% of methyl ethyl ketone peroxide.
When using 0.4-0.5% of cobalt and 2% of methyl ethyl ketone peroxide, we may have a gel time of around 20 minutes. When we further add a promoter, the gel time drops to 4 - 6 minutes.
Always starting from 23°C.
The catalytic system makes it possible to modulate the gel time from a few minutes to more than 1 hour.

- Tg is the time in minutes corresponding to the gel time, coinciding with the moment at which the temperature grows exponentially.
- Te is the time in minutes corresponding to the setting time, coinciding with the point of maximum temperature reached.
- PIC is the maximum temperature reached, in °C.

Figure 2A shows the appearance of halogenated resin according to the testing of the examples. Figure 2B shows the appearance of a P/N intumescent base resin.
Figure 3 shows the height of the intumescent layer formed after the calorimetric cone test for the specimens G, H and I.
Figure 4 shows a graph of the height of the intumescent layer versus the % of glass fiber of the composite.

## Summary description of the invention

In a first aspect, the present invention relates to a composite material comprising a fire-proof resin and a gelcoat as indicated in the claims.
In a second aspect, the present invention relates to the method for the production of a composite material according to the first aspect of the invention.
In a third aspect, the present invention relates to the use of the composite material according to the first aspect of the invention in means of transportation, preferably railways, and construction.
In a fourth aspect, the present invention relates to a component of a railway transportation comprising the composite material according to the first aspect of the invention.

## Description of the invention

The present invention relates to a composite material comprising:

a) a fire-proof resin consisting of

- 50 parts by weight of a resin, being an unsaturated polyester resin based on DCPD in a dilution of styrene, a vinyl ester resin in a dilution of styrene obtained by reaction between epoxy bisphenol-A and methacrylic acid, or a mixture of the two resins in any given proportion;
- 20 to 40 parts by weight of ammonium polyphosphate;
- 20 to 5 parts by weight of melamine;
- 10 to 5 parts by weight of dipentaerythrite; provided that the parts by weight of ammonium polyphosphate, melamine and dipentaerythrite add up to 50 parts by weight;

b) a gelcoat formed by a resin, being an unsaturated polyester resin based on DCPD in a dilution of styrene and a vinyl ester resin in a dilution of styrene obtained by reaction between epoxy bisphenol-A and methacrylic acid, or a mixture of the two resins in any given proportion; said resin or resins being made thixotropic with fumed silica. In a preferred embodiment, said composite material furthermore comprises

c) finish paint based on a hydroxylated acrylic resin, cross linked with isocyanates, containing for every 100 parts by weight of a component A up to 25 parts by weight of HDI (hexamethylene diisocyanate), wherein said component A comprises:

- hydroxylated acrylic resin
- rheological additives
- surface additives
- solvent
- pigments
- fire retardants (ammonium polyphosphate, melamine and dipentaerythrite).

In another preferred embodiment, said composite material additionally comprises fibers selected from among glass fiber, aramide fiber, and carbon fiber, or a mixture of these. Preferably, said fibers are glass fibers.

In another preferred embodiment, said composite material additionally comprises between 1 and 4 wt.% of flexible unsaturated polyester resins containing maleic anhydride, adipic acid and hexane diol.

In another preferred embodiment, the gelcoat in said composite material has a thickness of 500 μm. A larger thickness, apart from not being economically satisfactory, might present problems of sagging and cracking. With this standard thickness, the specifications of the standard are met.

In another preferred embodiment, the melamine and the ammonium polyphosphate in said composite material are in the form of particles with a size of 8 to 15 μm, which allows for minimizing the sedimentation.

It should be understood that any of the embodiments relating to the composite material may be combined with each other.

The present invention likewise relates to a railway transportation component comprising the composite material according to any of the embodiments described in this document. By "railway transportation" is meant any system for transportation of people or goods that is guided on a railroad, such as a train, subway, trolley car, etc.

In one preferred embodiment, said railway transportation component comprising the composite material is the structure and lining, the luggage rack, the control console, tables and washstands, strips, base structure of the passenger seat, interior surfaces of the corridors, walls of the external structure of the vehicle or the front part of the train.

*Detailed explanation of the composite material to achieve the objective of the invention*

The resins required for the composite material of the present invention should be as reactive as possible, since they are to be mixed with flame retardants, and the resulting mixture should harden adequately when catalyzed. Furthermore, the formulations need to be stable over time, at least for three months, in order to be transported where they are needed without any problems of gel formation by interaction between the resin and the flame retardants. It is also required that the resin formulated with the flame retardant additives be stable to the decantation of the resins within the flame retardant. To avoid this problem, it is necessary to adjust the viscosity with rheological additives so that the resin is as fluid as possible, in order to be easily applied, yet have sufficient viscosity to prevent the sedimentation of the flame retardant additives. The adding of rheological additives such as fumed silica or BYK 605 allows the viscosity of the resin to be increased somewhat, without being in conflict with its application. Around 0.2-03% of fumed silica or around 0.15% of BYK 605 is sufficient. Obviously, the content of flame retardant additives should allow one to reach the required specification for fire reaction and smoke toxicity and density, without any of this detracting from the mechanical properties of the composite material being produced.

As an indication of the extent to which the resins should be supplemented with flame retardants, the maximum

limit is generally around 50% in order to comply with the above indicated expectations.

There are two types of resins of interest for our purposes:

- Resins of unsaturated polyester based on DCPD. Dicyclopentadiene (DCPD) is at first reacted with maleic anhydride, producing an adduct used to manufacture polyester by polymerization with a diol, such as 1,2-propylene glycol, 1,4-butanediol, etc. This type of unsaturated polyester in a dilution of styrene, as the reactive monomer, produces lower viscosities than those obtained by reaction with maleic anhydride. The resins of DCPD thus have the advantage of being fluids. Moreover, one may further dilute with even more styrene, producing after their curing composite materials with good mechanical properties.

- Resins of vinyl ester. The resins of vinyl ester are obtained by a reaction between epoxy bisphenol-A and methacrylic acid, resulting in the difunctional monomer epoxy bisphenol-A-methacrylate. The dilution of the latter in styrene, as the reactive monomer, is known as vinyl ester resin. Other vinyl ester resins exist, but in the present invention only that of epoxy bisphenol-A reacted with methacrylic acid shall be considered, as this is highly reactive and at the same time sufficiently stable for our purposes, presenting very low viscosities.

Apart from styrene used as a reactive diluent par excellence in unsaturated polyester, thanks to its good price/quality ratio in regard to the mechanical properties of the final manufactured composite material, one should consider the reactive acrylic diluents, which may be useful to us in certain instances: pentaerythritol tetramethacrylate (PETTMA), hexane diol dimethacrylate (HDMA, trimethyl propane triacrylate (TMPTA). The difunctional and/or trifunctional allyl monomers may also be useful to us, such as diallyl phthalate, diallyl maleate, triallyl cyanurate and triallyl trimelitate.

The curing system for the resins, that is, how they harden or become polymerized, is generally carried out by the use of cobalt salts, such as cobalt octoate dissolved in a solvent, such as "white spirit," with a cobalt content of 6%, being known as the accelerant, and an organic peroxide, such as methyl ethyl ketone peroxide, with an active oxygen content of 9%.

The mechanism of curing, hardening or polymerization consists in that the organic peroxide, at levels of 1.5 to 2.5%, dissolved in the resin which contains the flame retardant additives, is decomposed by the cobalt salt, generally containing the resin above around 0.5%. The reaction between the peroxide and the cobalt generates organic radicals derived from the peroxide, causing the polymerization of the resin.

During the polymerization, an exothermal reaction is produced. The time it takes for the resin to polymerize depends on the proportions of the cobalt salt and the organic peroxide (catalytic system), as well as the starting temperature and even the humidity conditions. The exothermia of the polymerization may affect the quantity of resin which can be polymerized in a single operation. The time it takes for the curing depends on the catalytic system.

The polymerization of the resin may be modulated, up to a certain point, by variations in the catalytic system of organic peroxide and cobalt salt. More peroxide, between around 1.5 and 2.5%, for a given % of cobalt salt, makes the curing time decrease. For a given % of organic peroxide between 1.5 and 2.5%, the more the % of cobalt salt added, the lower the curing time will be. Besides the % of organic peroxide and cobalt salt, there are other substances which affect the catalytic system. Substances such as dimethyl acetoacetamide, diethyl paratoluidine, dimethyl aniline and others of the same kind act as promoters of the catalytic system at levels of 0.1% to 0.2% on the resin, shortening the time invested in the curing. Other substances, such as para-tert-butyl catechol (p-TBC), at a level of a few g/Tn, are able to lengthen the time invested in the curing, as well as improve the thermal stability of the resin. These substances have the common property of being compounds with a phenolic structure, being able to react with radicals, forming very stable radicals. That is, the presence of phenolic compounds such as p-TBC inhibits the reaction of the resin with radicals, lengthening the curing time when they are used in small doses. In larger doses, the curing may be totally inhibited.

In the polymerization process, the resin is thickened until it becomes a solid, less rigid at the beginning, but over the course of several hours becoming rigid. In the polymerization process, the radicals generated by the decomposition of the organic peroxide by the cobalt salt are responsible for increasing the viscosity of the polymerizing mass, limiting the mobility of the radicals, and consequently slowing down the polymerization reaction. It is believed that 95% of the polymerization occurs in several dozen minutes, whereas to achieve complete polymerization it may take several days. In practice, the composite materials of polyester resin and/or vinyl ester are subjected to a heating cycle of several hours at around 60°C to ensure that the polymerization is complete. In the case of the formulations of resins which are presented in the present invention, it has been found that the same surface hardness of 40 barcol is achieved either by subjecting the items to a heating cycle or by avoiding such a heating. In general, this treatment can improve the mechanical performance of the composite material, especially when using resins of medium or low reactivity.

In resin formulations with flame retardants, and in general those containing an elevated percentage of added solids, the reactivity of the resin is an important parameter to be taken into account. The more unsaturated the resins, the greater the cross linking achieved when copolymerized with the reactive monomer in which they are diluted, generally being styrene, producing a more cross-linked final polymer, that is, one with a larger number of carbon/carbon bonds

between the styrene and the unsaturated polyester.

The more maleic anhydride contained in the polyester, the more unsaturated bonds it will have and therefore the more styrene bridges can be formed. The styrene bridges contain between two and three molecules of styrene, and this will be affected by the relative rates of copolymerization between the styrene radicals and the radicals of unsaturated polyester.

In keeping with the above, and from an analysis of the degradation of the final polyester polymer, it is known that for every two unsaturated maleic bonds present in the molecules of unsaturated polyester there are required between two and three molecules of styrene to achieve a final polymer having the best possible mechanical performance, and therefore the greater the percentage of maleic anhydride in the unsaturated polyester, the more styrene needed for its polymerization, and therefore the more fluid the dissolving of the unsaturated polyester in the styrene. It must be considered that the molecular weights of the polyester molecule are generally between 1000 and 2000 g/mol. Obviously, the lower the molecular weight, the less viscous the basic unsaturated polyester and the more fluid its dissolving in styrene.

The same comments made for the unsaturated polyester in styrene are applicable in the case of vinyl ester resins likewise diluted in styrene.

The more reactive resins are thus generally more fluid, that is, they allow more flame retardants to be added, until reaching the maximum possible as a function of the criteria of applicability, mechanical performance, and stability.

If the resin is formulated with a lot of ballast, its appearance will be pasty, and its practical applicability will be limited. Depending on the system for application of the resin, it may be more or less tolerant, but in general resins formulated with flame retardants having viscosities between 1000 and 1500 cPs usually present no problems with application.

The more reactive the resin, that is, the greater its content of maleic anhydride, the harder it will be and also the greater its toughness, which is excellent in terms of the mechanical performance, but also the more crystalline it will be, and therefore less resistant to flexotraction. To minimize this shortcoming, one can make use of flexible resins in a small proportion, which may vary between 1 and 4 wt.%. The flexible resins of unsaturated polyester obviously contain little maleic anhydride, the majority diacid being adipic acid, and the diol is hexane diol. These resins present elongation at break of around 100% or even 200%. The flexible resins are the most simple solution for finding a compromise between toughness and flexotraction.

The resins with a high content of maleic anhydride are thus highly reactive, which means that their mean lifetime is shorter than that of standard resins with medium reactivity. When they are formulated with flame retardants, the resulting product needs to be usable for at least 3 months. In order to maintain the viscosity of the resin formulated with flame retardants as constant as possible during its useful life, it is customary to inhibit it with the minimum dose of para-tert-butylcatechol for particular conditions of use. The greater the dose of inhibitor, the longer the gel time and at the same time the greater its thermal stability (stable over time). The practical limit is that in which the gel time is practical and productive when the resin is delivered to the customer. If the inhibitor is present in excess, the resin will not cure.

The reactivity is a property which can be easily measured. One places 100 g of resin in a plastic vessel of low weight, catalyzes with cobalt octoate having a cobalt content of 6% and with an organic peroxide, such as 0.5% of octobalt and 2% of methyl ethyl ketone peroxide with an active oxygen content of 9%. The plastic vessel is placed in an adiabatic container, such as a box of porexpan. A temperature probe connected to a temperature/time recorder is inserted and the graph is plotted during the polymerization process (see Fig. 1).

The compound material, or composite, resulting from applying the resin, optionally with fiber reinforcements, on a mold on which a gelcoat has been previously applied, has a toughness close to that of metals, but with less density and no corrosion problems. By selecting the resins and the fibers adequately, materials are designed with resistance to the latter, from components for the aeronautical industry, the aerospace industry, engineering and construction. The fiber most often used is glass fiber because of its good strength and low price. There are other fibers with better performance, such as aramide fiber and carbon fiber, with which better mechanical performance is obtained.

The most usual systems for application of the resins formulated with flame retardants are:

- manual lamination. The resin is applied manually with the aid of rollers to the mold containing the fibers.
- pouring. Direct addition of the resin onto a mold
- RTM (Resin Transfer Molding). Pumping to a closed mold, inside which the fibers are located; may be assisted by vacuum suction from the opposite end.
- winding of filaments. The fibers soaked in resin are wound onto a mold of cylindrical geometry.

In the manual lamination and RTM processes, a paint is usually applied first to the mold, being known as a gelcoat, and the optional fiber laminations are deposited on this, being stratified with resin. In the pouring processes, the resin applied to the mold without reinforcement fibers is usually pigmented.

The gelcoat is a formulation of nature and composition similar to that of the resin, being pigmented and constituting the finished color of the composite piece once it is finished. The gelcoat is catalyzed like the resin with

cobalt salts and an organic peroxide.

The resins with improved fire reaction, or fire-resistant resins, are formulations in which flame retardant additives are incorporated. These formulations must successfully pass fire reaction tests, in the case of the calorimetric cone test according to ISO 5660-1:2015, and smoke toxicity and density in the case of the smoke chamber test according to ISO 5659-2:2013. If the content of flame retardants in a formulation is not sufficient, it will not pass the test. If, on the other hand, the flame retardants are formulated in excess, to guarantee the passing of the test, we then run the risk of the formulation not being applicable because it has a percentage of solids making its application not feasible. It is necessary to find a point of equilibrium at which there is a minimum of flame retardants and a maximum of resin so that the mechanical properties are sufficient for the performance demanded of the composite piece. This point of equilibrium may be 50% of flame retardants and 50% of resin.

The mixture of the flame retardants, generally being solid, with the resin in proportions on the order of 50% for each of them needs to be stable to decantation, that is, the formation of a gradient of solids from the bottom to the mouth of the container in which it is stored. The viscosity of the resin, at a certain temperature, and the particle size distribution of the flame retardants affect the stability to decantation of the formulation. The larger the particle size of the flame retardants, the greater their rate of sedimentation, for the same viscosity of the resin. The greater the viscosity of the resin, the lower the rate of decantation of the particles of larger size. A very fine particle size is not advantageous, because it tends to thicken the resin. A very fluid resin allows a greater proportion of flame retardants than a very viscous one, but it has the drawback that the rate of decantation is greater for the same particle size than that of a more viscous resin. In summary, the experience gained in the tests carried out and presented below lets us establish the general conclusion set forth below.

Fine particles up to 8 microns have a thickening effect, the smaller they are the greater the thickening capacity, and they also have a slow rate of decantation.

Particles of approximately 15 microns have the best behavior; they are not very thickening and their rate of decantation is still low. Formulations with mean particle sizes of approximately 15 microns are easily stabilized for decantation.

As the particle size increases above 15 microns, the thickening effect is meager, but they are decanted with greater ease. For example, particles with a mean size of 40 microns are easily decanted when they are in a suspension of resins on the order of 1000 cPs of viscosity at 25°C. Obviously, the decantation depends highly on the temperature, due to the drop in viscosity of the resins when the temperature is raised.

Starting with reactive resins having low viscosity, for example from 40 to 400 cPs maximum at 23°C, with a resin percentage on the order of 50% and 50% of flame retardants having a particle size centered on 15 microns, one obtains final viscosities on the order of 800 to 1000 cPs. These formulations, slightly supplemented with thixotropic agents such as fumed silica or other liquid rheological agents such as BYK 605, enable a rather good stabilizing of the decantation processes, unless the storage temperature is elevated, for example on the order of 30°C. As has been mentioned, these products behave like yogurt, providing viscosity at rest, enabling fluidity in motion; they increase the viscosity of the resin slightly, without impeding its application. They are efficient at limiting the sedimentation of the ballast.

The formulation of the resin and the flame retardants also needs to be stable at temperature; the formation of gel nuclei which will grow until a complete gel is formed must be delayed as much as possible. To improve the thermal stability, given the fact that the most adequate resins are the most reactive ones, one must employ inhibitors and take certain precautions. If formulated with a promoter of the catalytic system, it becomes even more unstable. If possible, it is better not to accelerate them with cobalt salts or, if these are present, to avoid the ingress of oxygen, which is not an easy thing to do. In the presence of oxygen, the unsaturated compounds may form reactive intermediates, such as oxetanes, epoxys, and organic peroxides of the hydroperoxide type, which break down in the presence of cobalt salts, producing radicals which cause the polymerization of the resin. In the presence of small amounts of inhibitor, such as para-tert-butylcatechol (pTBC), it is possible to improve the stability, on the level of a few hundreds of grams per ton of resin. The more inhibitor added, the greater the thermal stability achieved. When the resin is going to be catalyzed, it is necessary to add somewhat more cobalt salt and organic peroxide in order to counteract the effect of the inhibitor.

The thermal stability of a pure resin or that of a resin formulated with flame retardants is easily evaluated by monitoring the evolution of the viscosity, maintaining the specimen at a temperature of 40°C or 50°C (accelerated test). Good thermal stability results are achieved by adding 100 to 1000 g/Tn of p-TBC, at the cost of using a larger percentage of cobalt salt and organic peroxide when catalyzing for its polymerization. The use of promoters such as dimethyl acetoacetamide, dimethyl aniline, toluidines, etc., is contraindicated. The stability may vary with the seasons, according to the storage temperatures. In winter, 3 months of stability can be guaranteed; in summer, depending on the temperatures reached, at least 2 months can be guaranteed, always keeping the resin below 30°C and not exposing it to sunlight. The storage temperature for a lifetime of 3 months is 18°C to 25°C maximum.

With regard to the flame retardant additives, the following aforementioned compounds are needed to generate an intumescent layer:

- Ammonium polyphosphate: of high degree of polymerization, n>100, presenting a low water absorption capacity. It is

a highly efficient additive for retarding flames and generating an intumescent layer without producing dense and toxic smoke. When heated above 240°C, it decomposes, producing ammonia gas and polyphosphoric acid, acting as a dehydrating agent of certain polyols, such as polysaccharides, etc., eventually generating a carbon layer known as char.

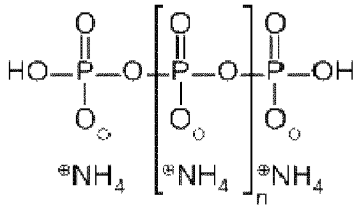

structure of ammonium polyphosphate.

- Melamine: acts as a foaming agent upon liberation of ammonia when decomposed by heating, yielding condensed products of analogous structure but lower molecular weight, forming as the stable decomposition product -g(C3N4)- or graphitic carbon nitride. Helps to foam the mass. The graphitic carbon nitride is part of the char.

There are other melamine compounds used as flame retardants, such as melamine cyanurate, melamine phosphates, melamine borate; these have been tested but did not give better results than melamine in the same percentage.

- Dipentaerythrite: is dehydrated by phosphoric acid to form ammonium polyphosphate, creating the carbon layer known as char.

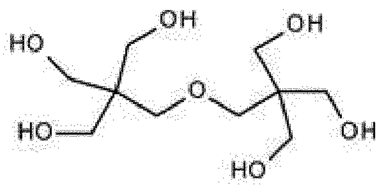

Structure of dipentaerythrite.

Starches, cellulose, and pentaerythrite act in a similar manner to dipentaerythrite, providing carbon to form the char, but the optimal compound would be dipentaerythrite, since a smaller quantity is needed. Char is the solid material formed, resulting from an organic material after a combustion process.

*Methods and uses of the composite material of the invention*

The present invention also relates to a method for the production of a composite material according to any of the previously indicated embodiments, involving the steps of:

a) applying gelcoat to a previously waxed mold, allowing the gelcoat to cure;
b) applying layers of fire-proof resin and, optionally, fibers to obtain the desired thickness;
c) allowing the material to cure in layers of step b);
d) removing the piece from the mold; and optionally
e) applying a finish paint.

The possible applications for the composite material of the present invention are ones requiring a material with improved fire reaction producing a low smoke density with a low index of toxicity, for example for highway, maritime, aeronautical, and obviously railway transportation, since the tests to which the composites will be subjected are standardized for railway applications. Their use in construction is also possible, when materials with improved fire reaction are required.

Thus, the present invention also relates to the use of the composite material according to any of the embodiments indicated above in means of transportation and construction.

In one preferred embodiment, said means of transportation are railway transportation. "Railway transportation" is

understood as being what was defined above.

In a more preferred embodiment, said railway transportation comprises the components of railway transportation according to the requirements set forth in standard UNE EN 45545-1 (see above).

In the following, a series of examples shall be given, reflecting the tests performed for the composite material developed in the present invention. These examples are mere illustrations and do not intend to limit the scope of the invention, which is established by the accompanying claims.

**EXAMPLES**

*Previous tests*

The materials used to study their fire behavior shall now be described in order to define formulations of resin, flame retardant additives, and other additives meeting the specifications set forth by the standard UNE EN 45545-2:2013+A1:2015.

Table 4. List of materials used in the formulation of resin and gelcoat

| Commercial name | Manufacturer | Comments |
|---|---|---|
| FR CROS 484 | BUDENHEIM | Ammonium polyphosphate (18 μm) |
| FR CROS S 10 | BUDENHEIM | Modified ammonium polyphosphate (7 μm) |
| APP 201 (*) | BIESTERFELD | Ammonium polyphosphate (18 μm) |
| BUDIT 312 (*) | BUDENHEIM | Melamine orthophosphate (10 μm) |
| BUDIT 3141 (*) | BUDENHEIM | Melamine polyphosphate (8 μm) |
| BUDIT 313 (*) | BUDENHEIM | Melamine borate (5 μm) |
| MELAMINE | BILTREC | Milled melamine (40 μm) |
| MELAMINE | BIESTERFELD | Milled melamine (15 μm |
| MICRAL 932 (*) | HUBER | Hydrated alumina (2-3 μm) |
| ON 310 (*) | ALBEMARLE | Hydrated alumina (10 μm) |
| ZINBOREL (*) | Soc. Chim. LARDERELLO, | Zinc borate (5-10 μm) |
| DIPENTA 85 | BIESTERFELD | Dipentaerythritol 85% |
| THEIC (*) | BIESTERFELD | Tris (2-hydroxyethyl) isocyanurate |
| LEVAGARD DMPP (*) | LANXESS | Dimethyl methyl phosphonate (20% P) |
| LEVAGARD TEP-Z (*) | LANXESS | Triethyl phosphate |
| STORFLAM ZHS (*) | JOSEP STOREY & Co | Zinc hydroxystannate (1-2 μm) |
| DELLITE 67G (*) | LAVIOSA CHIMICA, SpA | Nanoparticle |
| AZODICARBONAMIDE (*) | TRAMACO | Foaming agent |
| HYDROCEROL (*) | CLARIANT | Foaming agent |
| APP 224 | BIESTEFELD | Encapsulated ammonium polyphosphate (15 μm) |
| APP 226 | BIESTERFELD | Ammonium polyphosphate encapsulated (15 μm) |
| PRESTER 2355 | CROMOGENIA | Vinyl ester resin |
| AROPOL FS series | ASHLAND | DCPD resin |
| DISTRITON 100 series | POLYNT | DCPD resin |
| NORSODINE B73233 | POLYBT | Flexible UP resin |
| CABOSIL M5 | CABOT CORPORATION | Fumed silica |
| ACCELERANT | METALEST | Cobalt octoate with 6% of Co |
| UNICAT1000 | CROMOGENIA UNITS, SA | Methyl ethyl ketone peroxide 9% active O |
| DMMA | EASTMAN | Promoter. Dimethylacetoacetamide |

(continued)

| Commercial name | Manufacturer | Comments |
|---|---|---|
| BYK 605 | BYK Chemie | Rheological additive |
| BYK 555 | BYK Chemie | Deaerating additive |
| BYK 980 | BYK Chemie | Viscosity depressor |
| DMBA | CROMOGENIA UNITS, SA | Promoter. |
| (*) these materials were discarded after the previous tests with the selected resins. | | |

In the following the previous tests carried out to obtain a formulation of resin, flame retardant additives and other additives meeting the specifications formulated for the standard UNE EN 45545-2:2013+A1:2015 shall be described.

These previous tests are meant to obtain an overall view of the correlation between the composition of the composite being tested and the results for fire reaction, smoke toxicity and density. They investigate which additives have a greater effect and which a lesser effect in the fire reaction and in the smoke. They investigate whether a correlation exists between the P/N ratio and the results obtained. These previous tests do not take into account the criteria for applicability and stability of the formulation or other aspects, such as the mechanical properties of the composite material.

Table 5: Results of the previous tests 20 – 24.

| Component | 20 | 21 | 22 | 22R | 23 | 24 |
|---|---|---|---|---|---|---|
| RESIN | 25.8 | 25.4 | 25.3 | 23.7 | 25.8 | 22.7 |
| CATALYST | 0.5 | 0.5 | 0.5 | 0.5 | 0.5 | 0.5 |
| ACCELERANT | 0.1 | 0.1 | 0.1 | 0.1 | 0.1 | 0.1 |
| FR CROS 484 | 24.5 | 30.3 | 30.2 | 28.3 | 35.6 | 33.0 |
| LEVAGARD DMPP | 5.7 | 6.5 | 6.5 | 6.1 | 5.1 | 6.8 |
| BUDIT 3141 | 3.8 | 4.3 | 4.3 | 4.0 | 4.1 | 4.8 |
| ON 310 | 5.7 | 6.5 | 6.5 | 6.1 | - | - |
| MICRAL 932 | - | 2.2 | 2.2 | 2.0 | - | - |
| P/N ratio | 2.0 | 2.0 | 2.0 | 2.0 | 2.0 | 2.0 |
| Viscosity (cps) | 450 | 1200 | 1000 | 1000 | 1200 | 1000 |
| % Fiber | 34 | 24.2 | 24.5 | 29.2 | 28.8 | 32.1 |
| **Total:** | **100** | **100** | **100** | **100** | **100** | **100** |

| Parameter measured | 20 | 21 | 22 | 22R | 23 | 24 |
|---|---|---|---|---|---|---|
| MARHE ($kW/m^2$) | 101.5 | 92.5 | 77.5 | 77.1 | 75.3 | 82.3 |
| Ds (4 minutes) | - | - | 461 | 377 | 245 | 326 |
| VOF4 (min) | - | - | 727 | 462 | 371 | 427 |
| Ds maximum | - | - | 605 | 711 | 375 | 578 |

Table 6: Results of the previous tests 27 – 34.

| Component | 27 | 29 | 31 | 32 | 33 | 34 |
|---|---|---|---|---|---|---|
| Resin | 24.9 | 22.7 | 24.7 | 24.9 | 25.5 | 25.6 |
| CATALYST | 0.5 | 0.5 | 0.5 | 0.8 | 0.8 | 0.8 |
| ACCELERANT | 0.1 | 0.1 | 0.1 | 0.2 | 0.2 | 0.2 |
| FR CROS 484 | 18.7 | 32.4 | 30.5 | 29.4 | 22.9 | 14.3 |
| LEVAGARD DMPP | 6.9 | 6.8 | 3.8 | 4.0 | 4.1 | 4.1 |
| BUDIT 3141 | 17.7 | 4.4 | 10.3 | 10.0 | 7.1 | 5.6 |
| ON 310 | - | - | - | - | 7.6 | 15.3 |

| | | | | | | |
|---|---|---|---|---|---|---|
| MICRAL 932 | - | - | - | - | 2.5 | 5.1 |
| STORFLAM ZHS | - | 1.0 | 0.5 | 0.5 | 0.5 | 0.5 |
| P/N ratio | 1.0 | 2.0 | 1.5 | 1.5 | 1.5 | 1.5 |
| Viscosity (cps) | 1700 | 1000 | 4000 | 3500 | 1800 | 1400 |
| **% Fiber** | **31.3** | **32.2** | **29.6** | **30.3** | **28.8** | **28.5** |
| **Total:** | **100** | **100** | **100** | **100** | **100** | **100** |

| Parameter measured | 27 | 29 | 31 | 32 | 33 | 34 |
|---|---|---|---|---|---|---|
| MARHE ($kW/m^2$) | 89.0 | 73.7 | 68.1 | 77.3 | 106.1 | 121.9 |
| Ds (4 minutes) | 363 | 297 | - | 252 | 531 | 486 |
| VOF4 (min) | 558 | 376 | - | 242 | 841 | 885 |
| Ds (maximum) | 518 | 520 | - | 446 | 663 | 637 |
| Index i | - | - | 0.29 | - | - | - |
| Index s | - | - | 0.04 | - | - | - |
| Index h | - | - | 0.15 | - | - | - |
| Index c | - | - | 0.45 | - | - | - |
| VOF4 (min) no number NF X 10702 | - | - | 34.7 | - | - | - |
| Ds maximum no number NF X 10702 | - | - | 261.0 | - | - | - |
| ITC/2 total no number NF X 70100 | - | - | 11.95 | - | - | - |

Table 7: Results of the previous tests 35 – 41

| Component | 35 | 36 | 37 | 38 | 39 | 41 |
|---|---|---|---|---|---|---|
| RESIN | 23.2 | 22.4 | 22.2 | 22.7 | 23.9 | 23.3- |
| CATALYST | 1.0 | 0.9 | 0.9 | 1.0 | 0.6 | 0.6 |
| ACCELERANT | 0.2 | 0.2 | 0.4 | 0.4 | 0.1 | 0.1 |
| FR CROS 484 | 30.0 | 29.5 | 28.9 | 39.4 | 30.3 | 29.5 |
| LEVAGARD DMPP | 6.1 | 5.9 | 5.9 | 6.0 | 6.2 | 6.0 |
| BUDIT 3141 | 10.2 | 9.8 | 9.6 | - | 10.3 | 10.0 |

| | | | | | | |
|---|---|---|---|---|---|---|
| SOTRFLAM ZHS | 0.5 | - | 0.5 | 0.5 | 0.5 | 0.5 |
| BYK 980 | - | - | 0.2 | 0.2 | - | - |
| DMPT | - | - | - | - | 0.04 | 0.04 |
| P/N ratio | 1.5 | 1.5 | 1.5 | 1.5 | 1.5 | 1.5 |
| Viscosity (cps) | 3800 | 3800 | 2700 | 1700 | 1300 | 1300 |
| **% Fiber** | **28.7** | **31.2** | **31.4** | **29.9** | **28.1** | **29.9** |
| **Total:** | **100** | **100** | **100** | **100** | **100** | **100** |

| **Parameter measured** | **35** | **36** | **37** | **38** | **39** | **41** |
|---|---|---|---|---|---|---|
| MARHE ($kW/m^2$) | 51.3 | 65.0 | 79.0 | 94.7 | 71.4 | 87.7 |
| Ds (4 minutes) | 167 | 152 | 188 | 314 | 224 | 229 |
| VOF4 (min) | 194 | 160 | 238 | 366 | 264 | 320 |
| Ds maximum | 410 | 368 | 398 | 525 | 402 | 345 |
| Index i | 0.00 | 0.12 | 0.35 | 0.33 | - | - |
| Index s | 0.00 | 0.00 | 0.13 | 0.21 | - | - |
| Index h | 0.00 | 0.00 | 0.15 | 0.30 | - | - |
| Index c | -0.33 | 0.29 | -0.41 | -0.17 | - | - |
| VOF4 (min) no number NF X 10702 | - | - | 17 | 102.5 | - | - |
| Ds maximum no number NF X 10702 | - | - | 272 | 343.0 | - | - |

Table 8: Results of the previous tests 43 – 49.

| **Component** | **43** | **44** | **45** | **45-2** | **46** | **47(1)** | **48(1)** | **49** |
|---|---|---|---|---|---|---|---|---|
| RESIN | 26.9 | 26.3 | 25.0 | 24.5 | 24.9 | 23.5 | 22.8 | 23.4 |
| CATALYST | 0.6 | 0.5 | 0.5 | 0.5 | 0.5 | 0.5 | 0.5 | 0.7 |
| ACCELERANT | 0.1 | 0.1 | 0.1 | 0.3 | 0.1 | 0.1 | 0.1 | 0.4 |
| FR CROS 484 | - | 39.4 | 42.7 | 42.2 | 37.1 | 40.2 | 34.1 | 40.9 |
| FR CROS S 10 | 40.3 | - | - | - | - | - | - | - |
| LEVAGARD DMPP | - | - | - | - | - | - | - | - |

| | | | | | | | | |
|---|---|---|---|---|---|---|---|---|
| LEVAGARD TEPZ | 4.2 | 4.1 | 4.3 | 4.2 | 4.2 | 4.0 | 3.9 | 4.1 |
| BUDIT 3141 | - | - | - | - | - | - | - | - |
| ZINBOREL | - | - | - | - | 5.3 | - | 4.9 | - |
| STORFLAM ZHS | 1.6 | 1.6 | 1.6 | 1.6 | 1.6 | 1.5 | 1.5 | 1.5 |
| BYK 980 | 0.5 | 0.5 | 0.5 | 0.5 | 0.5 | 0.5 | 0.5 | 0.5 |
| P/N ratio | 2.6 | 2.6 | 2.6 | 2.6 | 1.9 | 2.6 | 1.9 | 2.6 |
| Viscosity (cps) | 6000 | 700 | 1500 | 900 | 900 | 600 | 400 | 1000 |
| **% Fiber** | **25.7** | **27.5** | **25.2** | **26.2** | **25.7** | **29.7** | **31.9** | **28.4** |
| **Total:** | **100** | **100** | **100** | **100** | **100** | **100** | **100** | **100** |

| **Parameter measured** | **43** | **44** | **45** | **45-2** | **46** | **47(1)** | **48(1)** | **49** |
|---|---|---|---|---|---|---|---|---|
| MARHE ($kW/m^2$) | 94.0 | 87.6 | 82.3 | 77.5 | 90.1 | 90.0 | 95.0 | 99.9 |
| Ds (4 minutes) | 296 | 303 | 274 | 293 | 324 | 309 | 402 | 506 |
| VOF4 (min) | 402 | 441 | 306 | 428 | 489 | 396 | 565 | 891 |
| Ds maximum | 479 | 516 | 456 | 518 | 483 | 384 | 469 | 622 |
| CITG (8 minutes) | - | - | - | 0.47 | - | - | - | 0.45 |

Table 9: Results of the previous tests 50 – 58.

| **Component** | **50** | **51** | **52** | **53** | **54** | **55** | **56** | **57** | **58** |
|---|---|---|---|---|---|---|---|---|---|
| RESIN | 24.7 | 24.9 | 27.1 | 30.6 | 29.6 | 29.2 | 29.3 | 29.4 | 30.6 |
| CATALYST | 0.5 | 0.5 | 0.6 | 0.6 | 0.6 | 0.6 | 0.6 | 0.6 | 0.6 |
| ACCELERANT | 0.3 | 0.3 | 0.3 | 0.4 | 0.4 | 0.4 | 0.4 | 0.4 | 0.4 |
| FR CROS 484 | 39.4 | 41.3 | 42.0 | 38.5 | 32.1 | 34.6 | 31.3 | 31.3 | 30.1 |
| LEVAGARD TEPZ | 4.3 | 4.3 | - | - | - | - | - | - | 2.0 |
| BUDIT 3141 | - | - | - | - | 5.1 | 5.0 | 8.6 | 7.8 | 8.2 |
| ZINBOREL | - | - | - | - | - | - | - | - | - |
| STORFLAM ZHS | 1.6 | - | 1.6 | - | - | - | - | - | - |
| BYK 980 | 0.5 | 0.5 | 0.5 | 0.5 | 0.5 | 0.5 | 0.5 | 1.0 | 0.5 |
| DIPENTA | 3.2 | 3.2 | 3.2 | 3.2 | 3.1 | - | - | - | 1.0 |
| P/N ratio | 2.6 | 2.6 | 2.4 | 2.4 | 1.8 | 1.8 | 1.5 | 1.5 | 1.5 |
| Viscosity (cps) | 2000 | 3000 | 8000 | 3300 | 3700 | 4200 | 5300 | 2100 | 3600 |

| % Fiber | 25.5 | 24.8 | 24.6 | 26.2 | 28.6 | 29.7 | 29.4 | 29.6 | 26.6 |
|---|---|---|---|---|---|---|---|---|---|
| Total: | 100 | 100 | 100 | 100 | 100 | 100 | 100 | 100 | 100 |

| Parameter measured | 50 | 51 | 52 | 53 | 54 | 55 | 56 | 57 | 58 |
|---|---|---|---|---|---|---|---|---|---|
| MARHE ($kW/m^2$) | 73.6 | 71.2 | 69.3 | 83.5 | 89.8 | 96.2 | 82.9 | 94.6 | 83.4 |
| Ds (4 minutes) | 236 | 235 | 317 | 351 | 281 | 195 | 154 | 257 | 286 |
| VOF4 (min) | 333 | 330 | 476 | 491 | 351 | 265 | 206 | 366 | 375 |
| Ds maximum | 491 | 532 | 641 | 632 | 570 | 529 | 459 | 491 | 542 |
| CITG (8 minutes) | 0.24 | 0.22 | 0.44 | - | - | 0.17 | 0.27 | 0.20 | 0.28 |

The resins used were Prester VE 2355 from Cromogenia Units, SA and DCPD resin from Ashland (Aropol FS series) and Polynt (Distriton 100 series), as well as flexible Polynt resin (Norsodine B73233). The results obtained using the vinyl ester resin, the DCPD resins, or mixtures of the two types of resin are equivalent. The observable differences lie in the catalysis, due to the different inhibition. Depending on the content of the inhibitor, the gel time can be modified between several minutes and one hour. The vinyl ester resin is inhibited with pTBC and has a gel time, using as the catalytic system 0.4% of cobalt octoate with 6% cobalt content and 2% of methyl ethyl ketone peroxide, on the order of at least 45 minutes. Under these same conditions, the DCPP resin has a gel time of less than 10 minutes.

The formulations of the resin or resins with the flame retardants depending on their content of inhibitor show a longer gel time as more inhibitor is added. In terms of stability, a gel time on the order of 45 to 60 minutes presupposes that the formulation will be thermally stable for a longer period of time, generally 3 months or more, if kept at temperatures below 25°C. The DCPD resin needs to be inhibited in order to be used in formulations with the described flame retardants, that is, adding on the order of p-TBC to lengthen its gel time and its useful lifetime, without forming a gel in the container. In any case, and as a general recommendation, the resin should be kept below 30°C, the stability at this temperature being around 30 days.

When the resin is catalyzed with methyl ethyl ketone peroxide and cobalt salt, we observe that, if a little inhibited resin is used, with the typical doses of cobalt and peroxide, we obtain relatively short gel times, similar to other resins, but if the resin is inhibited, then the dose of cobalt salt may reach 1% or even more. It all depends on the thermal stability that we wish to give the formulation of the resin with flame retardants; the more inhibitor, the more cobalt salt will be required to arrive at the same reference gel time.

The more relevant conclusions obtained from the previous tests as detailed in tables 5, 6, 7, 8 and 9 are:

1.- Little effect on diminishing the smoke density by adding a smoke suppressor, of proven efficacy in formulations with halogenated resins.

2.- Little effect of aluminum hydrate, which has given high values for both Marhe and smoke density

3.- The P/N ratio does not correlate with the Mahre values. There are very clear indications that a high percentage of both P and N gives better values of Marhe and lower smoke densities.

4.- Very good effect from adding BYK 980 as a viscosity depressor in the tested formulations.

5.- Glass fiber, used in proportions of 25 to 34% in the composite preparations, does not correlate with the Marhe values. That is, in principle, a greater percentage of fiber, understood as being a smaller percentage of resin in the composite, should give smaller Marhe values, but we see that this is not so.

6.- Some results are not easy to interpret unless we assume a fault in the curing of certain specimens.

7.- Percentages of ammonium polyphosphate (APP) on the order of 40% and at least 15% of melamine polyphosphate seem to be required in order to obtain Marhe values between 55 and 65 kW/m2, but in this case the percentage of resin is reduced to around 35%, which appears to seldom occur.

8.- Alumina hydrates (ATH), smoke suppressors used in halogenated resins, zinc borate and organic liquid phosphates are not effective in the tested formulations.

9.- The nondependency of the Marhe value obtained with respect to the percentage of glass fiber in a range of 25 to 34% leads one to think that the content of resin could be increased from 35 to 45% or more, such as 50%, by improving the effectiveness of the flame retardant additives ammonium polyphosphate (APP) and melamine polyphosphate, melamines in general, and the dipentaerythrite introduced in tests 50-58 of table 9.

*Comparison of the results obtained with the resin MIF1*

An M1F1 resin is a resin which meets the specifications set forth by the standards UNE 23727:2006, NF X 10702:2006 and NF X 701100: 2006, which prevailed prior to the adoption of the current standard UNE EN 45545-2: 2013+A1:2015.

The M1F1 resins are formulated with halogenated resins, whether it be chlorenic acid and/or tetrabromophthalic acid; they may or may not further contain brominated flame retardant additives, such as tetrabromo-1,2-diphenyl ethane, antimony oxide, and smoke suppressors such as zinc hydroxystannate. These resins have a good fire reaction, but the smoke toxicity and density is rather high.

Following the line of the previous tests, the resin was formulated with the three components required to form the intumescent layer:

- ammonium polyphosphate, generating polyphosphoric acid, which dehydrates the polyol, yielding carbon to generate the layer of char.
- melamine, or a melamine derivate, a foam potentiator and contributing to the formation of char by generating [g-C3N4] or graphitic carbon nitride.
- dipentaerythrite as carbon donor for forming char

Unlike the halogenated resins, which after the testing in the calorimetry cone to determine the Marhe of the composite are reduced to inconsistent ash of white color, the resins based on phosphorus and nitrogen, being intumescent, generate a very hard crust of char of black color (see figures 2A and 2B).

In table 10, the results obtained by subjecting an M1F1 resin to the demands of Requirement 1 of the standard UNE EN 45545-2:2013+A1:2015 are compared to a resin free of halogens and antimony, formulated with flame retardants based on phosphorus and nitrogen, and developed based on the previous results obtained in the preceding section of Previous Tests.

Table 10: Comparison between halogenated M1F1 resin and Prester Resin 1165 according to standard UNE EN 45545-2:2013+A1:2015

| Requirement 1 | RESIN M1F1 | | | RESIN 1165 | | |
|---|---|---|---|---|---|---|
| Risk level | HL1 | HL2 | HL3 | HL1 | HL2 | HL3 |
| CFE (kW/m2) | 30.41 | 30.41 | 30.41 | 24 | 24 | 24 |
| MARHE (kW/m2) | 69.5 | 69.5 | 69.5 | 85 | 85 | 85 |
| Ds (4 minutes) | 639.42 | 639.42 | 639.42 | 121 | 121 | 121 |
| VOF4 | 1373 | 1373 | 1373 | 237 | 237 | 237 |

Table 11: Formulation of composite material

| Component parts | RESIN PRESTER 1165 ref 151116 | GELCOAT HL ref 14151116 |
|---|---|---|
| RESIN | 50 | 48.5 |
| ACCELERANT | 0.5 | 0.6 |
| CABOSIL M5 | 0 | 1.5 |
| FR CROS 484 | 34 | 34 |
| MELAMINE | 9 | 9 |

(continued)

| Component parts | RESIN PRESTER 1165 ref 151116 | GELCOAT HL ref 14151116 |
|---|---|---|
| DIPENTA | 7 | 7 |
| BYK 980 | 0.5 | 0.5 |
| CATALYST | 1.5 | 2.0 |
| Viscosity (cps) | 1100 | 2200 |
| % Glass fiber in composite | 25.5 | |

The results obtained in table 10 with the formulation set forth in table 11 make it clear that, by properly combining ammonium polyphosphate, melamine and dipentaerythrite, one achieves good results in the tests by formulating with resin percentages of 50%, as commented upon in the conclusions of the preceding section on the previous tests. The composition of resin used, whether unsaturated polyester based on DCPD, or vinyl ester, both of them in a monomer solution of styrene as the reactive monomer, or mixtures of the two resins, does not affect the results on fire reaction obtained in the calorimetric cone or those of smoke toxicity and density obtained in the smoke chamber, as we have proven in tests where the resin was modified.

*Influence of the arrangement of the glass fiber layers on the fire reaction of the composite*

Composites are prepared with the gelcoat HL of reference H12-291016 and the resin Prester 1165 of reference 200916, applying a percentage of glass fiber of 25 +/- 1% in the composite. The gelcoat is spread over a waxed glass mold with an applicator to form a layer of 750 micron thickness. Three specimens are prepared: A, B and C. Each specimen has a different arrangement of the glass fibers. In specimen A, a film of glass fiber is applied to the gelcoat; in specimen B, a glass fiber mat of 100 g, and in specimen C a glass fiber mat of 200 g. Once this first layer has been applied, all of the specimens are finished by laminating with two mats of glass fiber of 450 g. With this test, we wish to see whether the fiber affects the intumescence, and whether the latter affects the test result.

Table 12: Test design and data

| TEST | GELCOAT | RESIN PRESTER 1165 | % RESIN | % GLASS fiber | THICKNESS | MATTS |
|---|---|---|---|---|---|---|
| A | HL12-290916 | 200916 | 75.25 | 24.75 | 750 μm | 1 film + 2x450 g |
| B | HL12-290916 | 200916 | 74.98 | 25.02 | 750 μm | 1x100 g + 2x450 g |
| C | HL12-290916 | 200916 | 76.11 | 23.89 | 750 μm | 1x200 g + 2x450 g |

Table 13: Composition of the composite formulation tested

| Component parts | RESIN PRESTER 1165 200916 | GELCOAT HL ref HL12-290916 |
|---|---|---|
| RESIN | 50 | 50 |
| CABOSIL M5 | 0 | 1.4 |
| ACCELERANT | 0.5 | 0.6 |
| FR CROS 484 | 34 | 34 |
| MELAMINE | 10 | 10 |
| DIPENTA | 6 | 6 |
| BYK 980 | 0.5 | 0.5 |
| CATALYST | 1.5 | 2.0 |
| Viscosity (cps) | 1100 | 2100 |

Table 14: Results obtained.

| Reference | Ignition time (s) | Extinction time (s) | MARHE (kW/m2) | THR 1200 s (MJ/m2) | q.max (kW/m2) | Mean rate of mass loss (g/m2.s) | TMLR 1200 s (g/m2) |
|---|---|---|---|---|---|---|---|
| A (mean) | 18 | 534 | 72.6 | 26.7 | 90.1 | 1.576 | 1863.18 |
| B (mean) | 19 | 494 | 76.41 | 32.3 | 94.79 | 1.748 | 2059.58 |
| C (mean) | 23 | 670 | 74.92 | 39.4 | 96.84 | 1.968 | 2318.36 |

Definition of the parameters listed in table 14:

MARHE (kW/m2): maximum value of the ARHE (t) in the 1200 s of the test.
THR 1200 s (MJ/m2) : total heat generated in the 1200 s of the test
q.max (kW/m2): peak of maximum heat generation in the 1200 s of the test
MLR: mean rate of mass loss (g/m2.s)
TMLR 1200 s (g/m2): mass loss in the 1200 s of the test.

The Marhe results obtained make it clear that the arrangement of the layers does not affect the Marhe values obtained, even though it is clearly observed that the rate of mass loss and the corresponding energy of combustion increase with the increasing grammage of the first layer of glass fiber; therefore, even though not affecting the Marhe value obtained in the first minutes of the test, it is clear that the intumescent layer is generated with more difficulty in the presence of fiber layers of greater grammage. The Marhe values obtained for Requirement 1 would be classified within risk level HL. This is something not described in the prior art.

*Influence of the thickness of the layer of gelcoat on the fire reaction of the composite*

Composites are prepared with the gelcoat of reference HL13-290916 and the reference resin Prester 1165, applying a percentage of glass fiber of 25 +/- 1% in the composite. The gelcoat is spread over a waxed glass mold with an applicator to form a layer of different thickness in each specimen. Three specimens are prepared: D, E and F. In each specimen, the arrangement of the glass fibers is the same; after the gelcoat hardens, a mat of glass fiber of 100 g/m2 is applied, and then during the lamination another two mats of 450 g are applied. The thickness of the composite is 3 mm. In this test, we wish to see whether the thickness of the layer of gelcoat affects the first reaction of the composite.

Table 15: Test design and data.

| TEST | GELCOAT | PRESTER 1165 | % RESIN | % FV | GELCOAT THICKNESS | MATS |
|---|---|---|---|---|---|---|
| D | HL13-290916 | 200916 | 71.8 | 28.2 | 500 μm | 1x100 g +2x450 g |
| E | HL13-290916 | 200916 | 78.8 | 21.2 | 750 μm | 1x100 g +2x450 g |
| F | HL13-290916 | 200916 | 100 | 0 | 1000 μm | 1x100 g +2x450 g |

Table 16: Composition of the composite formulation tested

| Component parts | RESIN PRESTER 1165 200916 | GELCOAT HL ref HL13-290916 |
|---|---|---|
| RESIN | 50 | 50 |
| CABOSIL M5 | 0 | 1.5 |

| | | |
|---|---|---|
| ACCELERANT | 0.5 | 0.6 |
| FR CROS 484 | 34 | 24 |
| MELAMINE | 10 | 20 |
| DIPENTA | 6 | 6 |
| BYK 980 | 0.5 | 0.5 |
| CATALYST | 1.5 | 2.0 |
| Viscosity (cps) | 1100 | 2200 |

Table 17: Results obtained

| Reference | Ignition time (s) | Extinction time (s) | MARHE (kW/m2) | THR 1200 s (MJ/m2) | q.max (kW/m2) | Mean rate of mass loss (g/m2.s) | TMLR 1200 s (g/m2) |
|---|---|---|---|---|---|---|---|
| D | 17 | 481 | 94.5 | 28.3 | 122.53 | 1.736 | 2052.9 |
| E | 17 | 541 | 102.2 | 35 | 137.02 | 1.96 | 2307.6 |
| F | 19 | 411 | 91.8 | 31.9 | 130.75 | 1.908 | 2247.8 |

The Marhe results obtained make it clear that the thickness of the layer of gelcoat does not significantly alter the obtained Marhe results. Given that the tolerance of the Marhe results allowed by the standard is 10%, the values found are within the standard. It is observed that even in the absence of glass fiber, the Marhe value does not vary less than the tolerance established by the standard. In this case, the formulations used do not meet the specifications established for Requirement 1 for risk level HL2, they only comply for risk class HL1, because the proportions of ammonium polyphosphate and melamine have been changed in the formulation of the gelcoat. Despite the poor result obtained, it is clear which proportions of polyphosphate and melamine are adequate and which are not. As for the thickness of the layer of gelcoat, thicknesses less than 500 microns are not usually applied. More than 750 microns requires the application of two successive layers to avoid problems of sagging and cracking.

The formulation of the gelcoat used for this test (ref. HL13-290916) is different from the one used in the test of the preceding series. As compared to the gel coat HL12-290916 which obtained a Marhe of 72 +/- 2 kW/m2, the Marhe is now 96 +/- 6. The difference found, since the composition of the resin formula of the laminate is the same, is due to the formulation of the gelcoat. Note that the gelcoat HL13-290916 contains less ammonium polyphosphate and more melamine, and therefore the formulation of the gelcoat HL12-290916 contains percentages of ammoniated ammonium polyphosphate and melamine which allow a better classification of the composite.

The most important conclusion is that thicknesses of 500 microns are not sufficient to comply with the specifications demanded by the standard. It may likewise be concluded that the changes in the formulation of the gelcoat might affect more than the resin, since the intumescent layer which can be generated by the gelcoat is not limited by the presence of glass fiber layers constraining its expansion.

*Influence of the percentages of resin and glass fiber on the results of the fire reaction of the composite material*

From the preceding results it is inferred that a lower percentage of glass fiber might have little or even no effect on the Marhe or the rest of the fire reaction parameters measured during the calorimetric cone test on the test specimen of 10x10 $cm^2$, because it favors the development of the intumescent layer. The fiber layers act like a bandage constraining the formation of the intumescent layer. We shall try to elucidate this matter in this test:

Table 18: Test design and data.

| TEST | GELCOAT | RESIN | % RESIN | % GLASS FIBER | GELCOAT THICKNESS | GLASS FIBER MATS |
|---|---|---|---|---|---|---|
| G | HL10-200616 | 200616 | 77.2 | 22.8 | 750 μm | 1x300 g + 2x450 g |
| H | HL10-200616 | 200616 | 100 | 0 | 750 μm | none |
| I | HL10-200616 | 200616 | 71.3 | 28.7 | 750 μm | 1x300 g + 2x450 g |

Table 19: Composition of the composite formulation tested.

| Component parts | RESIN PRESTER 1165 200616 | GELCOAT HL ref HL10-200616 |
|---|---|---|
| RESIN | 50 | 50 |
| CABOSIL M5 | 0 | 1.4 |
| ACCELERANT | 0.5 | 0.6 |
| FR CROS 484 | 32 | 32 |
| MELAMINE | 11 | 11 |
| DIPENTA | 7 | 7 |
| BYK 980 | 0.5 | 0.5 |
| CATALYST | 1.5 | 2.0 |
| Viscosity (cps) | 1000 | 2100 |

Table 20: Results obtained.

| Reference | MARHE (kW/m2) | THR 1200 s (MJ/m2) | q.max (kW/m2) | TMLR 1200 s (g/m2) |
|---|---|---|---|---|
| G | 80.04 | 46.9 | 104.43 | None collected |
| H | 78.29 | 81.17 | 104.8 | 4503.2 |
| I | 72.2 | 29.1 | 89.74 | 2072.4 |

MARHE (kW/m2): maximum value of the ARHE (t) in the 1200 s of the test.

THR 1200 s (MJ/m2): total heat generated in the 1200 s of the test

q.max (kW/m2): peak of maximum heat generation in the 1200 s of the test

MLR: mean rate of mass loss (g/m2.s)

TMLR 1200 s (g/m2): mass loss in the 1200 s of the test.

The results obtained make it clear that the percentage of glass fiber of the composite does not affect the Marhe. With a percentage of glass fiber of 22.8 % or with no glass fiber in the composite, the Marhe values found differ by less than 2 kW/m2, that is, the composites show basically the same Marhe. The test results are within the range of 76 +/- 4 kW/m2, being acceptable values for the standard, allowing us to establish the independence of the presence of glass fiber in the Marhe value of the composite tested.

Recall that the Marhe (Maximum Average Rate of Heat Emission) is the maximum value of the rate of heat emission over time. This maximum may be located at different times, depending on the material, but always within the first

minutes of the test. Marhe is a derivative, not an integral: it does not provide information about the total energy liberated in the forced combustion. We see that the total heat generated at 20 minutes, the time when the test ends, is greater in the case when the composite does not contain glass fiber, that is, by having a larger content of resin, it has burned to a greater extent, therefore generating more energy. In fact, the values of TMLR registered at 20 minutes reveal this fact, making clear a greater mass loss for the composite containing a greater percentage of resin. In accordance with the facts, the Marhe value depends on the formulation of the resin and that of the flame retardants selected, not on the percentage of fiber used in the composite, as might be imagined a priori according to the prior art. The glass fiber layers, as indicated, constitute a bandage which prevents the free expansion of the intumescent layer, since the Marhe does not depend on the percentage of glass fiber, according to the results which we have found, and therefore the formation of a greater height of intumescent layer should depend on the percentage of glass fiber. (see Fig. 3 and Fig. 4)

As a conclusion, the height of the intumescent layer depends on the percentage of glass fiber of the composite, but the Marhe value is not affected by this percentage, and therefore it depends on the formulation of the resin and the flame retardant.

*Influence of the origin and surface treatment of the ammonium polyphosphate on the results of the fire reaction of the composite*

There are different manufacturers of ammonium polyphosphate offering different types on the market. The most effective ones are called encapsulated, that is, coated with polymers which act as a barrier, regulating the rate of liberation of ammonia and the diffusion of the product into the composite under a temperature gradient when acted upon by a flame. It is to be expected that different types of ammonium polyphosphate should give different results in the calorimetric cone test. If it is possible to alter the kinetics of the decomposition of the ammonium polyphosphate by the encapsulation, it is possible that certain types of encapsulation will allow us to obtain a more favorable Marhe.

Table 21: Test design and data.

| TEST | GELCOAT P1820336 | RESIN P 1165 | % RESIN | % GLASS FIBER | GELCOAT THICKNESS | GLASS FIBER MATS |
|---|---|---|---|---|---|---|
| J | (484) | (424) | 82.4 | 17.6 | 500 μm | 1 film + 2x450 g |
| K | (224) | (224) | 86.7 | 13.3 | 500 μm | 1 film + 2x450 g |
| L | (262) | (262) | 84.0 | 16.0 | 500 μm | 1 film + 2x450 g |

Table 22: Composition of the composite formulation tested.

| Component parts | PREST ER 1165 (484) | PRESTER 1165 (262) | PRESTER 1165 (224) | GELCO AT P182033 6 (484) | GELCOA T P1820336 (262) | GELCOA T P1820336 (224) |
|---|---|---|---|---|---|---|
| RESIN | 50 | 50 | 50 | 48 | 48 | 48 |
| FLEXIBLE RESIN | 0 | 0 | 0 | 2 | 2 | 2 |
| ACCELERANT | 0.5 | 0.5 | 0.5 | 0.6 | 0.6 | 0.6 |
| APP 262 | 0 | 33 | 0 | 0 | 33 | 0 |
| APP 224 | 0 | 0 | 33 | 0 | 0 | 33 |
| FR CROS 484 | 33 | 0 | 0 | 33 | 0 | 0 |
| MELAMINE | 10 | 10 | 10 | 10 | 10 | 10 |
| DIPENTA | 7 | 7 | 7 | 7 | 7 | 7 |
| BYK 555 | 0 | 0 | 0 | 0.1 | 0.1 | 0.1 |
| BYK 605 | 0.1 | 0.1 | 0.1 | 0.15 | 0.15 | 0.15 |
| BYK 980 | 0.5 | 0.5 | 0.5 | 0.5 | 0.2 | 0.2 |
| CABOSIL M5 | 0.3 | 0.3 | 0.3 | 1.4 | 1.4 | 1.4 |
| CATALYST | 1.5 | 1.5 | 1.5 | 2.0 | 2.0 | 2.0 |
| Viscosity (cps) | 1400 | 1400 | 1400 | 2200 | 2200 | 2200 |

Table 23: Results obtained.

| Reference | MARHE (kW/m2) | THR 1200 s (MJ/m2) | q.max (kW/m2) | VMPM (g/m2.s) | INITIAL IGNITION s | FINAL EXTINCTION s | TMLR 1200 s (g/m2) |
|---|---|---|---|---|---|---|---|
| J | 65.4 | 47.5 | 83.7 | 1.664 | 31 | 1140 | 2940 |
| K | 67.6 | 56.3 | 81.8 | 2.029 | 31 | 1000 | 2871 |
| L | 55.4 | 31.7 | 80.7 | 1.258 | 28 | 1050 | 3044 |

For the same formulation and method of preparation of a composite, one obtains different Marhe values as a function of the type of encapsulation of the ammonium polyphosphate used. The encapsulation is important because it lets us modify the Marhe or maximum rate of heat emission achieved during the calorimetric cone test. A priori, even knowing the type of polymer used to encapsulate the ammonium polyphosphate, it is only through a calorimetric cone test that we could obtain practical information as to how the encapsulation alters the Marhe value, being able to select those types of ammonium polyphosphate that allow us to obtain a better classification for the composite tested.

In this example, the tested ammonium polyphosphate, APP 262, allows us to achieve the risk level HL3 for Requirement 1, since the Marhe obtained is below 60 kW/m2, which the standard UNE EN 45545:2013+A1:2015 establishes for this requirement.

*Formulation and testing of a finish paint for the composite material*

For those situations when a finish paint is required, whether for the color characteristics, or because it is not possible to reproduce the color on a gelcoat, a finish paint is formulated and the degree of compliance with the standard UNE EN 45545-2:2013+A1:2015 is tested.

Table 24: Test design and data.

| TEST | GELCOAT HL | RESIN P 1165 | % RESIN | % GLASS FIBER | GELCOAT THICKNESS | GLASS FIBER MATS |
|---|---|---|---|---|---|---|
| M | 290817 | 290817 | 82.0 | 18.0 | 750 μm | 1 film + 2x450 g |
| N | 290817 and FINISH PAINT | 290817 | 82.0 | 18.0 | 750 μm<br>40 μm | 1 film + 2x450 g |

Table 25: Composition of the composite formulation tested.

| **Component parts** | **RESIN PRESTER 1165 290817** | **GELCOAT HL ref 290817** |
|---|---|---|
| RESIN | 50 | 48.5 |
| FLEXIBLE RESIN | 0 | 1.5 |
| CABOSIL M5 | 0.3 | 1.5 |
| ACCELERANT | 0.5 | 0.6 |
| FR CROS 484 | 33 | 33 |
| MELAMINE | 10 | 10 |
| DIPENTA | 7 | 7 |
| BYK 980 | 0.5 | 0.5 |
| CATALYST | 1.5 | 2.0 |
| Viscosity (cps) | 1300 | 2200 |

Table 26: Formulation of the acrylic urethane finish paint.

| Component A | | |
|---|---|---|
| SYNTHALAT A 1633 | 36.98 | Hydroxylated acrylic resin |
| DISPERBYK 163 | 0.31 | Dispersant |
| CABOSIL M 5 | 0.31 | Fumed silica. Thixotropic agent |
| TITANIUM DIOXIDE RDI-S | 6.78 | White pigment |
| TALC LR 1T 5 | 4.93 | Primer |
| CERAFLOUR 994 | 0.49 | Surface hardness additive |
| TIN DIBUTYL DILAURATE | 1.23 | Catalyst |
| BYK-320 | 0.25 | Surface additive |
| BYK 333 | 0.25 | Surface additive |
| BUTYL ACETATE | 25.27 | Solvent |
| SOLUTION CAB 381-002 20% | 1.33 | Cellulose acetate-butyrate. Film-forming agent |
| TINTERSOL YELLOW 42 (TT 104) | 0.70 | Ochre pigment |
| FR CROS 30 | 5.28 | Flame retardant |
| DIPENTA | 2.11 | Carbonizer for intumescence |
| MELAMINE | 3.17 | Flame retardant |
| Total % | 100 | |

Component B: Desmodur N75 (HDI).

100 parts of component A are mixed with 20 parts of component B and the resulting paint is applied with a gun. It may be necessary to add 5 to 10% of butyl acetate in order to adjust the viscosity to 50 seconds in Ford cup 4.

Table 27: Results obtained.

| Reference | MARHE (kW/m2) | CFE (kW/m2) | Ds4 | VOF4 (minutes) | CTIg 4 | CTIg8 |
|---|---|---|---|---|---|---|
| M | 64.43 | 28.45 | 64.43 | 140.71 | 0.06 | 0.140 |
| N | 76.4 | 26.24 | 181.3 | 348.6 | 0.106 | 0.196 |

Despite the paint incorporating the same flame retardants, and despite the scant thickness applied, the contribution to the Marhe is 12 kW/m2. In order to apply finish paints to a composite for risk level HL3, we would need to have a Marhe of the finished composite with gelcoat of 45 kW/m2, a value which does not appear to be easy to achieve.

*Detailed preparation of the composites tested*

The composites described in tables 5, 6, 7, 8 and 9 and all of the examples discussed, corresponding to the previous tests, and those described subsequently, are prepared by incorporating the accelerant, cobalt octoate with a cobalt content of 6%, on the resin, followed by the liquid flame retardants, when present; after this, flame retardant additives are added, which may be in solid form, according to the sequence set forth in each formulation of the table. For this, a metal container is used, of a 500 to 1000 ml canister type, with a fixed capacity, on a support. The ingredients are dispersed by using a cowless agitator of maximum diameter being half the diameter of the canister, with variable speed from 0 to 1500 rpm. In order to ensure a good dispersion, the agitation is maintained at 1500 rpm for at least 20 minutes. The temperature of the dispersion should not go above 30°C, requiring external cooling with a water tank. Once the dispersion has been homogenized, the final additives are added, such as BYK 980, to decrease the viscosity of the formulation. The viscosity is measured with a Brokfield RV DVE viscosimeter.

The resulting fire-proof resins or gelcoats are tested by catalyzing one aliquot part of the formulation with methyl

ethyl ketone peroxide. The mixture is agitated to incorporate this in a homogeneous manner. A layer of gelcoat of around 500 microns is applied with an applicator for this thickness and allowed to polymerize at ambient temperature for several hours, until it has hardened, yet maintaining a certain tackiness or stickiness. A first sheet of glass fiber is applied, laminating manually with a special roller for the laminate of resin and fibers, incorporating resin which has previously been catalyzed. The lamination operation is repeated, applying at minimum three sheets of glass fiber of 400 g/m2, between each laminate layer allowing the previous layer to harden sufficiently to easily apply the next layer. Depending on the quantity of resin applied, one obtains proportions of 25 to 30% of glass fiber in the composite with regular thicknesses of 3 mm. The composite is subjected to a post-curing of 6 hours at 50°C to finish the polymerization process. Prior to testing the composite, it is left for at least 24 hours in a room with a constant humidity of 50% at 23°C. The composite is cut to the required dimensions, according to the corresponding standards for each test. Then the test is carried out.

*Conclusions*

a) Resin systems:

1) The fire-proof resin systems based on DCPD resins, modified with styrene monomer, have an adequate behavior. In order to guarantee adequate thermal stability, it is necessary to inhibit the resin with p-TBC, which means it is necessary to catalyze with more peroxide and accelerate with more cobalt salt, even using some kind of promoter of the catalytic system. This inhibition is necessary in order to improve the thermal stability (lifetime), but in return the gel time is longer (less production). A compromise needs to be found.

2) The fire-proof resin systems based on the vinyl ester resin PRESTER 2355 have an adequate curing. The resin is very reactive and it is inhibited so that the gel time is around 45 minutes, catalyzing with 2% of methyl ethyl ketone peroxide and 0.4% of cobalt octoate having 6% cobalt content.

3) In general, the ammonium polyphosphate, which is the flame retardant used in a greater percentage, inhibits the catalytic system. It is advisable to adjust the catalytic system with adequate percentages of cobalt octoate, methyl ethyl ketone peroxide, or other additives such as acetyl acetone peroxide. One may also make use of promoters.

b) Flame retardants and smoke suppressors:

4) In the majority of the tests, ammonium polyphosphate FR CROS 484 was used. FR CROS S 10 drastically increases the viscosity of the resin system. The type APP 201 considerably increases the viscosity of the resin system and complicates the later impregnation of the glass fiber. In particular, the type APP 262 has given the best results.
5) LEVAGARD DMPP inhibits the curing of the vinyl ester resin in an apparent way, yet TEPZ does not, but its use was halted because it acts as a plasticizing agent.
6) Melamine polyphosphate (BUDIT 3141) and melamine orthophosphate (BUDIT 312) have similar behavior, but do not produce better results than the melamine in our resins.
7) A better fire-proof behavior has not been found when using boron derivates such as melamine borate BUDIT 313 or zinc borate ZINBOREL.
8) The melamines tested have a different fire-proof nature depending on their origin, with the milled melamine of 40 and 15 microns sold by Biesterfeld being much more effective.
9) The two aluminum hydroxides analyzed (ON 310 and MICRAL 932) result in formulations generating a high smoke density, due to the opacity of the water vapor released during their decomposition. Thus, the use of ATH is contraindicated.
10) DIPENTA 85 clearly assists the phenomenon of intumescence in the resin system and in the gelcoats which were studied.
11) In the previous tests, no obvious improvement was noticed from the fact of adding nanoparticles (DELLITE 67G) in the formulation. What is noticed is an ostensible increase in the viscosity of the resin system owing to the small granulometry of the nanoparticles.
12) Neither was an ostensible improvement noticed in the fire behavior of the gelcoat when adding THEIC (tri (2-hyxroxyethyl) isocyanurate) to its formulation.
13) Although working well in halogenated resins, no decrease in the smoke opacity/density was noticed when adding around 0.5% to 1% of zinc hydroxystannate.

14) Of the two foaming agents added in the formulation of the gel-coat, the one producing better results is azodicarbonamide. Even so, its addition results in yellowish gel-coats (something which might be remedied by later application of a polyurethane type paint). The other foaming agent used, HYDROCEROL, inhibits the curing of the basic resin system of the gel-coat.

15) The halogenated derivates (DBDFE) and $Sb_2O_3$ were rejected because of the poor results obtained in the opacity and toxicity of the gases.

*Homologations*

COMPOSITE OF FIRE-PROOF RESIN WITH GLASS FIBER. FINISHED WITH GEL COAT:

Materials: Resin: Prester 1165, Gel coat: Unigel 2HL.
Composite: Polyester reinforced with glass fiber. Contains a surface film and two mats of 450 g/m2. Thickness 4 mm. Weight per unit of surface 5.86 kg/m2. Thickness of gel coat 600 microns.
Classification per Standard UNE EN 45545-2:2013+A1:2015.

| REQUIREMENT | RISK LEVEL |
|---|---|
| R1 | HL1, HL2 |
| R2 | HL1, HL2, HL3 |
| R3 | HL1, , HL2, HL3 |
| R6 | HL1, HL2 |
| R7 | HL1, HL2 |
| R17 | HL1, HL2 |

Report: P17-19879/2. Gaiker IK4. 4/4/2018.
COMPOSITE OF FIRE-PROOF RESIN WITH GLASS FIBER, GEL COAT AND FINISH PAINT:
Materials: Resin: Prester 1165, Gel coat: Unigel 2HL, Paint: fireproof Unilak 2K.
Composite: Polyester reinforced with glass fiber. Contains a surface film and two mats of 450 g/m2. Thickness 4 mm. Weight per unit of surface 5.86 kg/m2. Thickness of gel coat 600 microns. Thickness of finish paint 40 microns.
Classification per Standard UNE EN 45545-2:2013+A1:2015

| REQUIREMENT | RISK LEVEL |
|---|---|
| R1 | HL1, HL2 |
| R2 | HL1, HL2 |
| R3 | HL1, , HL2, HL3 |
| R6 | HL1, HL2 |
| R7 | HL1, HL2 |
| R17 | HL1, HL2 |

Report: P17-19880/2. Gaiker IK4. 1/25/2018.

## Claims

**1.** A composite material comprising:

a) a fire-proof resin consisting of

- 50 parts by weight of a resin, being an unsaturated polyester resin based on DCPD in a dilution of styrene, a vinyl ester resin in a dilution of styrene obtained by reaction between epoxy bisphenol-A and methacrylic acid,

or a mixture of the two resins in any given proportion;
- 20 to 40 parts by weight of ammonium polyphosphate;
- 20 to 5 parts by weight of melamine;
- 10 to 5 parts by weight of dipentaerythrite;

provided that the parts by weight of ammonium polyphosphate, melamine and dipentaerythrite add up to 50 parts by weight;
b) a gelcoat formed by a resin, being an unsaturated polyester resin based on DCPD in a dilution of styrene and a vinyl ester resin in a dilution of styrene obtained by reaction between epoxy bisphenol-A and methacrylic acid, or a mixture of the two resins in any given proportion; said resin or resins being made thixotropic with fumed silica.

**2.** The composite material according to claim 1, further comprising
c) finish paint based on a hydroxylated acrylic resin, cross linked with isocyanates, containing for every 100 parts by weight of a component A up to 25 parts by weight of HDI (hexamethylene diisocyanate), wherein said component A comprises:

- hydroxylated acrylic resin
- rheological additives
- surface additives
- solvent
- pigments
- fire retardants (ammonium polyphosphate, melamine and dipentaerythrite).

**3.** The composite material according to claim 1 or 2, additionally comprising fibers selected from among glass fiber, aramide fiber, and carbon fiber, or a mixture of these.

**4.** The composite material according to claim 3, wherein said fibers are glass fibers.

**5.** The composite material according to any of the preceding claims, additionally comprising between 1 and 4 wt.% of flexible unsaturated polyester resins containing maleic anhydride, adipic acid and hexane diol.

**6.** The composite material according to any of the preceding claims, wherein the gelcoat has a thickness of 500 μm.

**7.** The composite material according to any of the preceding claims, wherein the melamine and the ammonium polyphosphate are in the form of particles with a size of 8 to 15 μm.

**8.** A method for the production of a composite material according to any of the preceding claims, involving the steps of:

a) applying gelcoat to a previously waxed mold, allowing the gelcoat to cure;
b) applying layers of fire-proof resin and, optionally, fibers to obtain the desired thickness;
c) allowing the material to cure in layers of step b);
d) removing the piece from the mold; and optionally
e) applying a finish paint.

**9.** A use of the composite material according to any of claims 1 to 7, in means of transportation and construction.

**10.** The use of the composite material according to claim 9, wherein said means of transportation are railway transportation.

**11.** The use of the composite material according to claim 10, wherein said railway transportation comprises the components of railway transportation according to the requirements set forth in standard UNE EN 45545-1.

**12.** A railway transportation component comprising the composite material according to any of claims 1 to 7.

**13.** The component according to claim 12, being the structure and lining, the luggage rack, the control console, tables and washstands, strips, base structure of the passenger seat, interior surfaces of the corridors, walls of the external structure of the vehicle or the front part of the train.

**Patentansprüche**

1. Ein Verbundstoff, der Folgendes umfasst:

    a) ein feuerfestes Harz, das aus Folgendem besteht:

    - 50 Gewichtsanteilen eines Harzes, das ein ungesättigtes Polyesterharz auf der Basis von DCPD ist, in einer Verdünnung von Styrol, ein Vinylesterharz in einer Verdünnung von Styrol, gewonnen durch Reaktion zwischen Epoxid-bisphenol-A und Methacrylsäure, oder eine Mischung der beiden Harze in beliebiger Proportion;
    - 20 bis 40 Gewichtsanteilen Ammoniumpolyphosphat;
    - 20 bis 5 Gewichtsanteilen Melamin;
    - 10 bis 5 Gewichtsanteilen Dipentaerythrit;

    vorausgesetzt, dass die Gewichtsanteile von Ammoniumpolyphosphat, Melamin und Dipentaerythrit sich zu 50 Gewichtsanteilen addieren;
    b) eine Gelschicht, geformt aus einem Harz, das ein ungesättigtes Polyesterharz auf der Basis von DCPD ist, in einer Verdünnung von Styrol, und ein Vinylesterharz in einer Verdünnung von Styrol, gewonnen durch Reaktion zwischen Epoxid-bisphenol-A und Methacrylsäure, oder eine Mischung der beiden Harze in beliebiger Proportion; wobei das Harz/die Harze mit hochdispersem Siliciumdioxid thixotrop gemacht werden.

2. Das Verbundmaterial gemäß Anspruch 1, das weiter Folgendes umfasst:
c) einen Schlussanstrich auf der Basis eines hydroxylierten Acrylharzes, quervernetzt mit Isocyanaten, der für jeweils 100 Gewichtsanteile einer Komponente A bis zu 25 Gewichtsanteile HDI (Hexamethylendiisocyanat) enthält, wobei die Komponente A Folgendes umfasst:

    - hydroxyliertes Acrylharz
    - rheologische Zusatzstoffe
    - grenzflächenaktive Zusatzstoffe
    - Lösungsmittel
    - Pigmente
    - Flammverzögerungsmittel (Ammoniumpolyphosphat, Melamin und Dipentaerythrit).

3. Der Verbundstoff gemäß Anspruch 1 oder 2, der zusätzlich Fasern umfasst, die gewählt sind aus Glasfaser, Aramidfaser und Kohlefaser oder eine Mischung davon.

4. Der Verbundstoff gemäß Anspruch 3, worin die Fasern Glasfasern sind.

5. Der Verbundstoff gemäß einem beliebigen der obigen Ansprüche, der zusätzlich zwischen 1 und 4 Gewichtsprozent weicher ungesättigter Polyesterharze umfasst, die Maleinsäureanhydrid, Adipinsäure und Hexandiol enthalten.

6. Der Verbundstoff gemäß einem beliebigen der obigen Ansprüche, worin die Gelschicht eine Dicke von 500 $\mu$m hat.

7. Der Verbundstoff gemäß einem beliebigen der obigen Ansprüche, worin das Melamin und das Ammoniumpolyphosphat in Form von Partikeln mit einer Größe von 8 bis 15 $\mu$m vorliegen.

8. Ein Verfahren zur Herstellung eines Verbundstoffs gemäß einem beliebigen der obigen Ansprüche, das folgende Schritte beinhaltet:

    a) das Auftragen einer Gelschicht auf eine zuvor gewachste Form, wobei die Gelschicht härten gelassen wird;
    b) das Auftragen von Schichten aus feuerfestem Harz und wahlweise Fasern, um die gewünschte Dicke zu erhalten;
    c) das Härtenlassen des Materials in den Schichten von Schritt b);
    d) das Entfernen des Teils aus der Form und wahlweise
    e) das Auftragen eines Schlussanstrichs.

9. Eine Nutzung des Verbundstoffs gemäß einem beliebigen der Ansprüche 1 bis 7 in Mitteln für den Transport und den Bau.

**10.** Die Nutzung des Verbundstoffs gemäß Anspruch 9, worin die Transportmittel Eisenbahntransport sind.

**11.** Die Nutzung des Verbundstoffs gemäß Anspruch 10, worin der Eisenbahntransport die Komponenten für Eisenbahntransport entsprechend den Anforderungen umfasst, die in der Norm UNE EN 45545-1 ausgeführt sind.

**12.** Eine Eisenbahntransportkomponente, die den Verbundstoff gemäß einem beliebigen der Ansprüche 1 bis 7 umfasst.

**13.** Die Komponente gemäß Anspruch 12, die die Struktur und Auskleidung, die Gepäckablage, die Steuerkonsole, Tische und Waschbecken, Leisten, Grundstruktur des Fahrgastsitzes, Innenflächen der Korridore, Wände der Außenstruktur des Fahrzeugs oder der vordere Teil des Zuges ist.

**Revendications**

**1.** Matériau composite comprenant :

a) une résine ignifuge constituée de

- 50 parties en poids d'une résine, étant une résine polyester insaturée à base de DCPD en dilution de styrène, une résine d'ester vinylique en dilution de styrène obtenue par réaction entre de l'époxy bisphénol-A et de l'acide méthacrylique, ou un mélange des deux résines dans n'importe quelle proportion ;
- 20 à 40 parties en poids de polyphosphate d'ammonium ;
- 20 à 5 parties en poids de mélamine ;
- 10 à 5 parties en poids de dipentaérythrite ;

à condition que les parties en poids de polyphosphate d'ammonium, de mélamine et de dipentaérythrite totalisent 50 parties en poids ;
b) un gelcoat formé d'une résine, à savoir une résine polyester insaturée à base de DCPD en dilution de styrène et une résine d'ester vinylique en dilution de styrène obtenue par réaction entre de l'époxy bisphénol-A et de l'acide méthacrylique, ou un mélange des deux résines dans une proportion quelconque ; ladite ou lesdites résines étant rendues thixotropes par de la silice pyrogénée.

**2.** Matériau composite selon la revendication 1, comprenant en outre
c) une peinture de finition à base d'une résine acrylique hydroxylée, réticulée avec des isocyanates, contenant pour 100 parties en poids d'un composant A jusqu'à 25 parties en poids de HDI (hexaméthylène diisocyanate), où ledit composant A comprend :

- résine acrylique hydroxylée
- additifs rhéologiques
- additifs de surface
- solvant
- pigments
- retardateurs de flamme (polyphosphate d'ammonium, mélamine et dipentaérythrite).

**3.** Matériau composite selon la revendication 1 ou 2, comprenant en outre des fibres choisies parmi fibre de verre, fibre d'aramide et fibre de carbone, ou un mélange de celles-ci.

**4.** Matériau composite selon la revendication 3, où lesdites fibres sont des fibres de verre.

**5.** Le matériau composite selon une quelconque des revendications précédentes, comprenant en outre entre 1 et 4 % en poids de résines polyester insaturées flexibles contenant de l'anhydride maléique, de l'acide adipique et de l'hexanediol.

**6.** Le matériau composite selon une quelconque des revendications précédentes, où le gelcoat a une épaisseur de 500 μm.

**7.** Matériau composite selon une quelconque des revendications précédentes, où la mélamine et le polyphosphate d'ammonium se présentent sous forme de particules d'une taille de 8 à 15 μm.

**8.** Procédé de fabrication d'un matériau composite selon une quelconque des revendications précédentes, comprenant les étapes suivantes :

a) l'application d'un gelcoat sur un moule préalablement ciré, puis le durcissement du gelcoat ;
b) l'application de couches de résine ignifuge et, éventuellement, de fibres pour obtenir l'épaisseur souhaitée ;
c) le durcissement du matériau par couches selon l'étape b) ;
d) le démoulage de la pièce ; et éventuellement
e) l'application d'une peinture de finition.

**9.** Utilisation du matériau composite selon une quelconque des revendications 1 à 7, dans les moyens de transport et la construction.

**10.** Utilisation du matériau composite selon la revendication 9, où lesdits moyens de transport sont des moyens de transport ferroviaire.

**11.** Utilisation du matériau composite selon la revendication 10, où lesdits moyens de transport ferroviaire comprennent les composants de transport ferroviaire conformes aux exigences énoncées dans la norme UNE EN 45545-1.

**12.** Composant de transport ferroviaire comprenant le matériau composite selon une quelconque des revendications 1 à 7.

**13.** Composant selon la revendication 12, étant la structure et le revêtement, le porte-bagages, la console de commande, les tables et les lavabos, les bandes, la structure de base du siège passager, les surfaces intérieures des couloirs, les parois de la structure extérieure du véhicule ou la partie avant du train.

Figure 1:

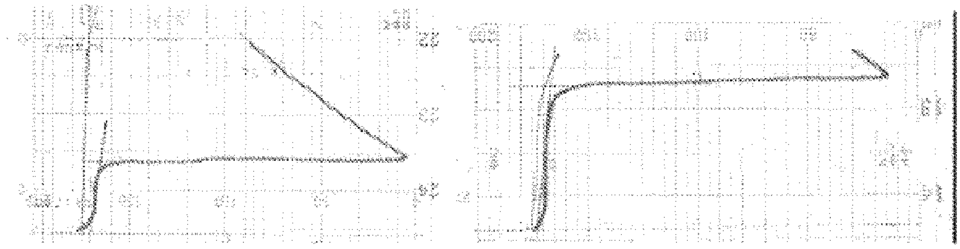

A) B)

Tg = 19' Te = 21' PIC = 196°C Tg = 33' Te = 35' PIC = 188°C

Figure 2A

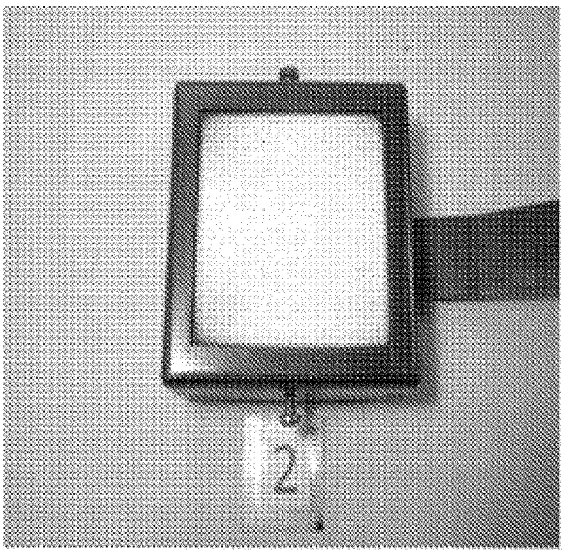

Figure 2B

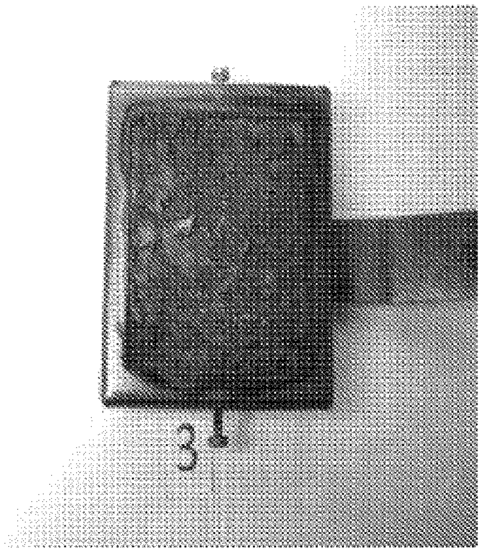

Figure 3

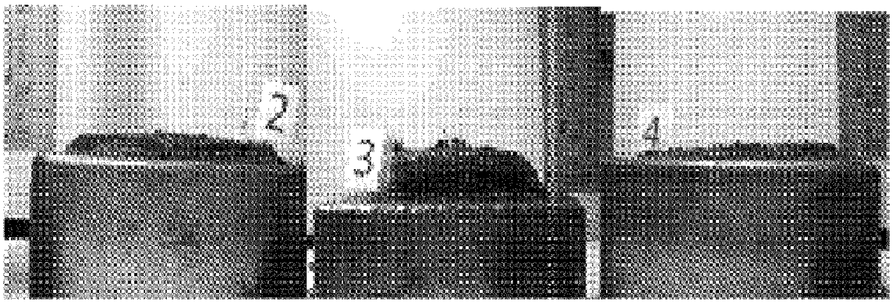


| Specimen ref. G | Specimen ref. H | Specimen ref. I |
|---|---|---|
| Mean height: 38 mm | 65 mm | 28 mm |
| Glass fiber: 22.8% | 0% | 8.7% |

Figure 4:

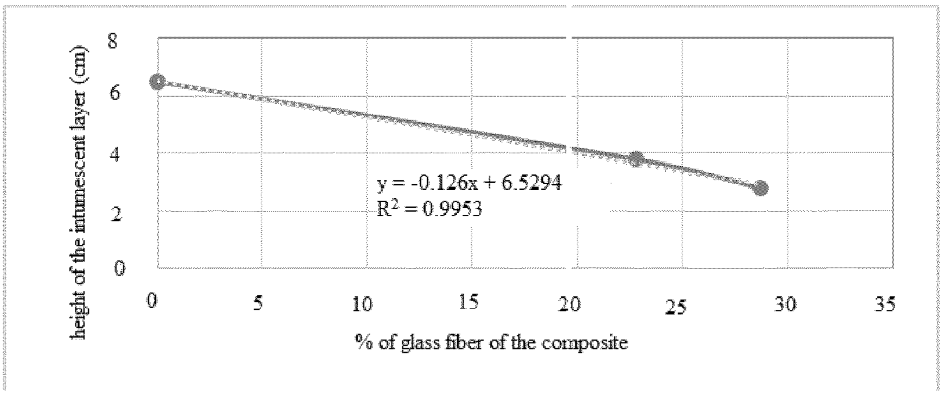

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 20171888248 A
- CN 106280020 A
- US 9266541 B2
- US 20160347952 A
- US 8969447 B2
- US 9365729 B2
- EP 2726528 A1
- WO 2010069465 A2
- US 2011237711 A1


### Non-patent literature cited in the description


- Classification as a function of fire behavior of construction products and building elements. Part 1: Classification based on data obtained from fire reaction tests.. *UNE EN 13501-1:2002*
- Basically: one measures the parameter known as MARHE, which is the mean value of the maximum rate of heat emission (KW/m2). *"Calorimetric cone.*
- Principles, regulations, testing and approval. **J. TROITZSCH**. Plastics Flammability Handbook. 2004